**Europäisches Patentamt**

**European Patent Office**

**Office européen des brevets**

(19)

(11) Numéro de publication : **0 337 565 B1**

(12) **FASCICULE DE BREVET EUROPEEN**

(45) Date de publication du fascicule du brevet :
**10.03.93 Bulletin 93/10**

(51) Int. Cl.⁵ : **H04N 7/00**

(21) Numéro de dépôt : **89200887.1**

(22) Date de dépôt : **10.04.89**

(54) **Dispositif de codage de signaux représentatifs d'une suite d'images et système de transmission d'images de télévision à haute définition incluant un tel dispositif.**

(30) Priorité : **15.04.88 FR 8805010**
**28.06.88 FR 8808652**
**08.07.88 FR 8809294**

(43) Date de publication de la demande :
**18.10.89 Bulletin 89/42**

(45) Mention de la délivrance du brevet :
**10.03.93 Bulletin 93/10**

(84) Etats contractants désignés :
**AT BE CH DE ES FR GB GR IT LI LU NL SE**

(56) Documents cités :
**WO-A-87/05770**
**COLLOQUE TVHD 87, Ottawa, 4-8 octobre
1987, vol. 1, pages 6.2.2 - 6.2.28; P. BERNARD
et al.: "Analyse de structure de sous-echantillonnage spatio-temporel d'un signal TVHD en
vue de SA transmission dans un canal MAC"
IBC'88 PROCEEDINGS OF THE INTERNATIO-
NAL BROADCASTING CONVENTION,
Brighton, 23rd - 27th septembre 1988, pages
62-65, IEE, London, GB; F.W.P. VREESWIJK:
"HD-MAC coding of high definition television
signals"
IEEE COMPUTER SOCIETY, PROCEEDINGS
WORKSHOP ON MOTION: REPRESENTATION
AND ANALYSIS, Charleston, 7-9 mai 1986,
pages 119-124, IEEE, New York, US; H. SHA-
RIAT et al.: "How to use more than two frames
to estimate motion"**

(73) Titulaire : **LABORATOIRES D'ELECTRONIQUE
PHILIPS
3, Avenue Descartes
F-94450 Limeil-Brévannes (FR)**
(84) **FR**
Titulaire : **N.V. Philips' Gloeilampenfabrieken
Groenewoudseweg 1
NL-5621 BA Eindhoven (NL)**
(84) **BE CH DE ES GB GR IT LI LU NL SE AT**

(72) Inventeur : **Haghiri, Mohammad-Rèza Société
Civile S.P.I.D.
209, rue de l'Université
F-75007 Paris (FR)**
Inventeur : **Guntzburger, Philippe Société
Civile S.P.I.D.
209, rue de l'Université
F-75007 Paris (FR)**
Inventeur : **Le Queau, Marcel Société Civile
S.P.I.D.
209, rue de l'Université
F-75007 Paris (FR)**
Inventeur : **Fonsalas, Frédéric Société Civile
S.P.I.D.
209, rue de l'Université
F-75007 Paris (FR)**

(74) Mandataire : **Landousy, Christian et al
Société Civile S.P.I.D. 156, Boulevard
Haussmann
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne dans un système de transmission d'images de télévision à haute définition comprenant un étage d'émission d'informations codées représentatives desdites images et, après transmission, à une fréquence de trame déterminée, par l'intermédiaire d'un canal à bande passante limitée impliquant un traitement de réduction de la quantité d'informations à transmettre, un étage de réception des informations transmises, dispositif de codage comprenant lui-même trois branches de traitement situées en parallèle et recevant chacune la suite des images haute définition d'origine, un circuit de décision destiné à délivrer à partir des images d'origine et des images traitées par lesdites branches un signal de décision envoyé vers un canal dit d'assistance numérique associé au canal analogique, et un circuit d'aiguillage des sorties des branches selon le signal de sortie dudit de décision.

L'invention concerne également un système de transmission d'images de télévision à haute définition incluant un tel dispositif.

L'invention est en effet applicable essentiellement dans le domaine de la télévision à haute définition. Dans un système de transmission d'images de télévision à haute définition selon le standard MAC, elle permet de réduire la bande passante des signaux de télévision en vue de leur transmission. On rappellera ici que ladite transmission est assurée par l'intermédiaire d'un canal analogique qui véhicule les données ayant subi la compression et qu'à ce canal analogique est associé un canal auxiliaire dit d'assistance numérique permettant la transmission d'informations complémentaires relatives aux mouvements des images transmises par le canal analogique.

Le problème qui se pose est en fait de maintenir, malgré la compression d'informations nécessaire pour adapter la quantité de ces informations à la bande passante limitée du canal de transmission, une résolution spatiale satisfaisante malgré le mouvement des images à transmettre.

Le but de l'invention est donc de proposer, dans un système de transmission d'images de télévision à haute définition à trois branches de traitement en parallèle selon la plus ou moins grande importance du mouvement dans les images d'origine, un dispositif de codage conduisant effectivement à la meilleure résolution spatiale possible quelle que soit la vitesse de déplacement du contenu des images à transmettre.

A cet effet l'invention concerne d'abord un dispositif caractérisé en ce que :

(a) les images d'origine successives étant définies par leur rang 2k-1, 2k, 2k+1, etc... dans ladite suite, ledit dispositif de codage comprend également un étage d'estimation de mouvement destiné à délivrer une ou des informations relatives au mouvement des blocs composant les images de rang 2k+1 par rapport aux blocs correspondants des images de rang 2k et 2k+2 qui entourent celles-ci ;

(b) lesdites branches, destinées à délivrer trois séquences d'images comprimées contenant le même nombre d'échantillons à transmettre à la fréquence de trame, comprennent elles-mêmes chacune un filtre spatial distinct :

(c) le circuit de prise de décision comprend, en parallèle, trois voies de calcul de distorsion entre les images d'origine et les trois images traitées respectivement disponibles en aval desdits premier, deuxième et troisième filtres spatiaux des trois branches, et un circuit de comparaison desdites trois distorsions et de sélection de l'indice de branche correspondant à la plus faible d'entre elles, la deuxième de ces trois voies de calcul recevant la ou lesdites informations de mouvement relatives à chaque bloc d'image en vue d'une reconstitution d'une approximation des images de rang 2k+1 à partir des images de rang 2k et 2k+2.

Les particularités et avantages de l'invention apparaîtront maintenant de façon plus détaillée dans la description qui suit et dans les dessins annexés, donnés à titre d'exemples non limitatifs et dans lesquels :

- les figures 1a et 1b montrent respectivement les parties codage, côté émission, et décodage, côté réception, d'un dispositif d'estimation et de compensation de mouvement pour un système de transmission d'images de télévision ;

- les figures 2 et 4 montrent respectivement les parties codage, côté émission, et décodage, côté réception, d'une réalisation d'un autre dispositif d'estimation et de compensation de mouvement pour un système de transmission d'images de télévision à haute définition ;

- la figure 3a montre de façon plus détaillée un exemple d'étage d'estimation de mouvement dans le dispositif de la figure 2, les figures 3b et 3d explicitent le contenu des circuits d'estimation de l'étage de la figure 3a, et la figure 3c montre un exemple de réalisation des cellules composant ces circuits d'estimation ;

- les figures 5 et 6 montrent des variantes de réalisation incorporant les dispositifs des figures 2 et 4 respectivement ;

- la figure 7 montre un exemple de réalisation, dans un système de transmission d'images de télévision à haute définition, d'un dispositif de codage selon l'invention ;

- les figures 8a à 8c représentent les trois branches de traitement du dispositif de la figure 7, la figure 8d une variante de la branche de la figure 8c, et les figures 9a à 9c les formats d'image correspondants en sortie desdites branches ;

- la figure 10 montre le circuit de prise de décision du dispositif de la figure 7 ;

- la figure 11 montre le dispositif de décodage associé au dispositif de codage de la figure 7 dans le système de transmission décrit ;

- la figure 12 montre une variante perfectionnée de réalisation du dispositif de codage selon l'invention ;

- les figures 13a à 13c représentent en détail les trois branches de traitement du dispositif de la figure 12, et la figure 14 le filtre temporel de la troisième de ces branches de traitement ;

- les figures 15 et 16 représentent de façon plus détaillée le circuit d'estimation de mouvement et le circuit de décision du dispositif de codage de la figure 12 ;

- la figure 17 montre le dispositif de décodage modifié associé à la variante de dispositif de codage de la figure 12 ;

- les figures 18a et 18b montrent une variante de réalisation du dispositif de codage, avec filtrage temporel compensé en mouvement, ainsi que le dispositif de décodage correspondant ;

- les figures 19 et 20 montrent de façon plus détaillée le circuit de filtrage temporel compensé en mouvement, utilisé dans le dispositif de codage, et le circuit de filtrage temporel inverse, utilisé dans le dispositif de décodage associé ;

- la figure 21 montre des exemples de valeurs des coefficients de pondération selon l'importance du mouvement dans les images ;

- les figures 22 et 23 montrent des variantes des circuits de filtrage temporel direct et inverse des dispositifs de codage et décodage des figures 18a et 18b.

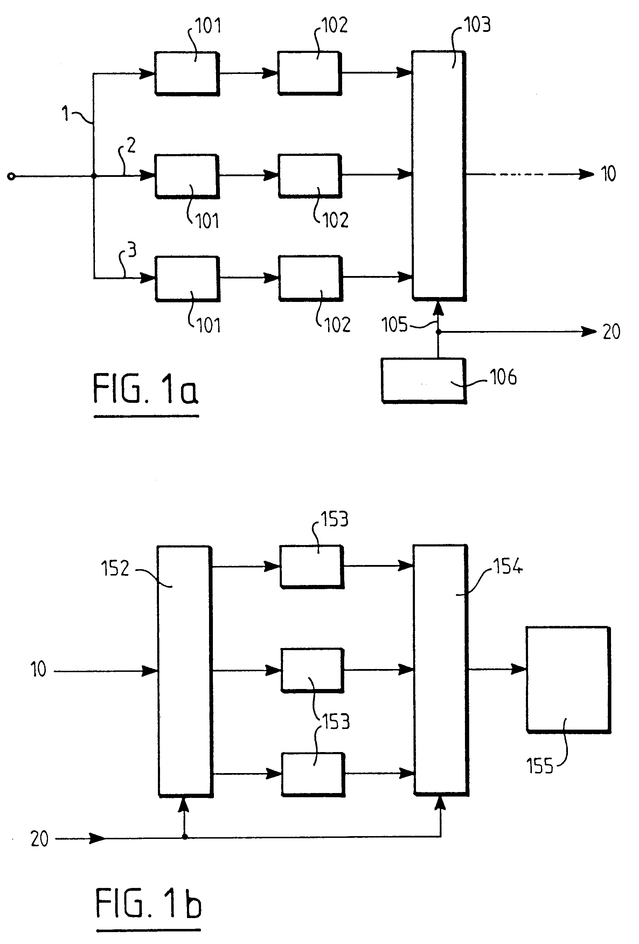

Le dispositif représenté sur la figure 1 dans le cas de l'application à un système de transmission d'images de télévision à haute définition comprend une partie codage à l'émission (figure 1a) et une partie décodage à la réception (figure 1b), qui coopèrent pour détecter et estimer le mouvement à l'intérieur des images à transmettre et adapter le traitement des données d'image à la plus ou moins grande importance de ce mouvement. Les images sont captées ici par une caméra de télévision à haute définition (non représentée) qui analyse la scène à l'aide d'un balayage entrelacé ou séquentiel à 1250 lignes et au rythme de 50 images par seconde. La caméra fournit bien entendu, après matriçage des signaux R, V, B, trois types de signaux : le signal de luminance Y et les deux signaux de différence de couleur U et V (ou signal de chrominance). Par la suite, la description concerne par exemple le signal de luminance mais s'appliquerait tout aussi bien au signal de chrominance. On précisera donc simplement que le signal de sortie de la caméra est échantillonné, et que les échantillons résultants sont présentés à l'entrée de la partie codage à un rythme de 54 Mégahertz dans le cas d'un balayage entrelacé et de 108 Mégahertz dans le cas d'un balayage séquentiel. Comme le canal de transmission, dans le cas du standard MAC, ne tolère qu'une cadence de 13,5 Mégahertz, un sous-échantillonnage doit être effectué préalablement à ladite transmission.

On précisera que les images pourraient, à la limite, être traitées point par point mais qu'il est plus simple de les découper en N blocs de m x n points. Au lieu d'opérer un balayage des points, on réalise alors un balayage des blocs, auxquels correspondent N points représentatifs desdits blocs.

L'estimation de mouvement mentionnée plus haut est prévue de la façon suivante. La partie codage représentée sur la figure 1a est constituée de plusieurs branches en parallèle, trois par exemple, appelées ici 1, 2 et 3. Ces branches reçoivent les échantillons formés comme indiqué plus haut et comprennent chacune un circuit de préfiltrage 101 et un circuit de sous-échantillonnage 102. Bien que les structures d'échantillonnage soient différentes d'une branche à l'autre, les taux de sous-échantillonnage sont identiques et ici égaux à 4 pour une suite d'images entrelacées et à 8 pour une suite d'images séquentielles. Les gabarits des filtres sont choisis de façon que le repliement dû au sous-échantillonnage soit évité. Les sorties des trois circuits de sous-échantillonnage sont envoyées vers un circuit d'aiguillage 103 qui, selon la commande reçue sur une quatrième connexion d'entrée 105, assure la sélection de l'une ou de l'autre desdites sorties en vue de sa transmission ultérieure via le canal analogique 10 du système de transmission.

La commande présente sur la connexion 105 du circuit d'aiguillage 103, normalement identique pour tous les points d'un bloc, est déterminée par un circuit de décision 106, selon un critère lié en général soit à une quantité mesurée à partir de l'image d'entrée, soit à l'énergie de l'écart entre les images traitées, issues des circuits 101 par exemple, et l'image d'origine. Dans le premier cas (décision a priori), la quantité mesurée peut être par exemple le mouvement ou la vitesse des objets présents dans l'image, et la décision est prise directement en fonction de la valeur prise par cette quantité. Dans le second cas (décision a posteriori), l'énergie de l'écart permet de déterminer la branche qui conduit à la meilleure reconstruction d'image à l'aide des échantillons transmis, et donc d'effectuer l'aiguillage en conséquence. L'information délivrée par le circuit de décision 106 est envoyée vers un canal 20 dit d'assistance numérique.

De façon similaire, à la réception, la partie décodage correspondante, représentée sur la figure 1b, comprend d'abord un circuit 152 de démultiplexage qui, à partir du signal transmis via le canal analogique 10, fournit à trois circuits de postfiltrage en parallèle 153 des images aux structures régulières appropriées. Enfin un circuit de multiplexage 154 reçoit les sorties de ces circuits de postfiltrage et permet, à partir du signal multiplexé, la génération d'une image pouvant être visualisée sur un écran 155 à haute résolution. Le signal transmis via le canal d'assistance numérique 20 est fourni en parallèle aux circuits 152 et 154.

Les structures de sous-échantillonnage, différentes d'une branche à l'autre comme on l'a vu, peuvent être purement spatiales ou bien permettre, en plus, l'élimination d'un certain nombre d'images dans la direction temporelle. On dispose alors d'un nombre proportionnellement plus élevé d'échantillons pour représenter les contenus spatiaux des images mais, en contrepartie, en cas de mouvement, les contenus temporels traduisant ce mouvement sont dégradés.

Deux types de dégradations peuvent être plus particulièrement constatés sur l'image reconstruite : d'une part les mouvements uniformes sont altérés, les objets se déplaçant par à-coups, d'autre part la résolution diminue brusquement dès qu'un objet fixe devient mobile, en raison du préfiltrage et du postfiltrage. L'un comme l'autre de ces défauts sont visuellement très gênants, et la présence d'une estimation et d'une compensation de mouvement y remédie très notablement, en éliminant les saccades et en conservant la résolution pour une plage de vitesses plus large.

Le principe de compensation de mouvement selon l'invention est le suivant. Dans la séquence d'images considérée, une image sur deux est tout d'abord éliminée (c'est-à-dire l'information spatiale disponible à un instant déterminé t). Ainsi, si la cadence ou fréquence temporelle est par exemple 1/T où T correspond à l'intervalle de temps séparant deux images successives, l'intervalle de temps après sous-échantillonnage temporel sera 2T. En appelant 2k-1, 2k, 2k+1, etc... les rangs successifs de la séquence d'images d'origine, cela signifie que les images associées par exemple aux instants t+(2k-1)T, t+(2k+1)T, etc..., ou images ici de rang impair, sont éliminées.

Parallèlement à cette élimination d'images, des informations de mouvement sont déterminées par une méthode d'estimation de mouvement prévoyant l'attribution à chaque bloc des images à éliminer, ici des images impaires, un vecteur de déplacement D tel que l'erreur de reconstruction du bloc soit minimale. Ces informations de mouvement sont ensuite utilisées à la réception pour reconstruire les images éliminées avant transmission, chaque bloc étant reconstruit à partir de la moyenne des informations de deux images consécutives dans la direction du mouvement associé au bloc. On limite ainsi les défauts dûs à l'imprécision de l'estimateur, lorsque celui-ci utilisait jusqu'à présent la solution classique d'une reconstitution d'une trame impaire (ou respectivement paire) seulement à partir de la trame de parité opposée précédente, solution qui présentait l'inconvénient de déformer les contours des objets solides.

Le principe ainsi défini est applicable par exemple dans un système de transmission d'images de télévision à haute définition et tout d'abord dans la partie codage de l'étage d'émission de ce système.

Dans ce qui suit, le sous-échantillonnage spatio-temporel réalisé permet d'obtenir un taux d'échantillonnage de 4 (2 en spatial, 2 en temporel) pour une suite d'images entrelacées et de 8 (4 en spatial, 2 en temporel) pour une suite d'images séquentielles. L'estimateur de mouvement qui va être utilisé est basé sur la méthode dite de corrélation par bloc (en anglais : block matching method), avec une plage de recherche égale à : déplacement horizontal ±3, déplacement vertical ±3). Toutefois, ce choix n'est pas limitatif et un estimateur d'un autre type pourrait être utilisé. On précisera ici également que les branches 1, 2, 3 correspondent à différentes vitesses de déplacement sur les images, l'intervalle de base entre images étant, dans l'exemple décrit, de 20 et 40 millisecondes pour les branches 1 et 2 respectivement et l'intervalle de base entre points élémentaires transmis ayant la même position spatiale dans l'image étant de 80 millisecondes pour la branche 3. C'est bien évidemment dans les branches 2 et 3 qu'il y a intérêt, le mouvement étant plus lent que dans le cas de la branche 1, à conserver la meilleure résolution. On a décrit d'abord l'application à la branche 2, l'extension à la branche 3 étant décrite plus loin.

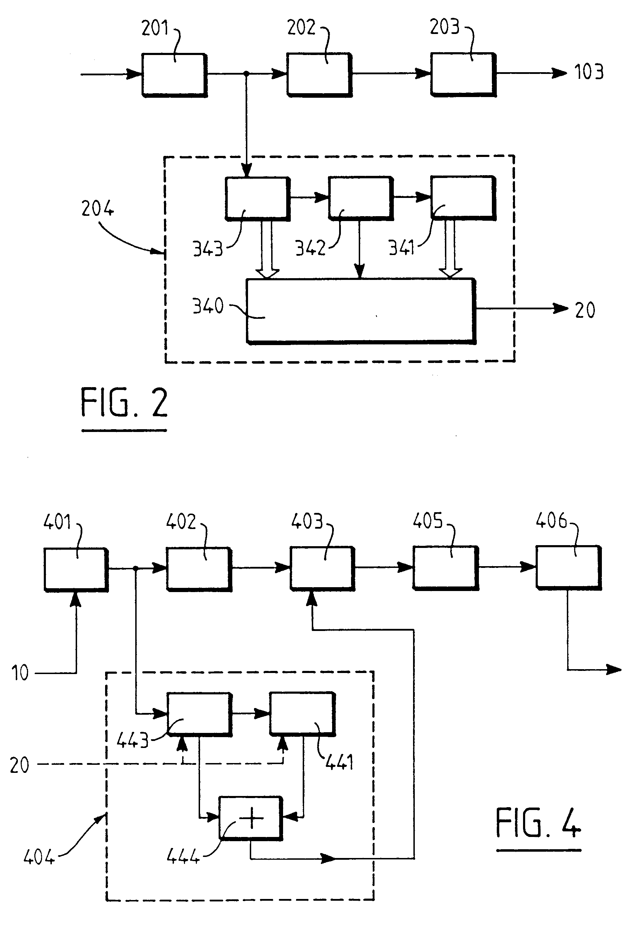

Selon l'exemple de la figure 2, le dispositif représenté comprend tout d'abord, à l'émission, pour la branche référencée 2, un circuit de préfiltrage spatial 201 recevant l'image d'entrée, qui est soit une image entrelacée 50 hertz, 2:1, 1250 lignes, 54 M-échantillons (= 54.10⁶) par seconde, soit une image séquentielle 50 hertz, 1:1, 1250 lignes, 108 M-échantillons par seconde. Ce circuit 201 permet d'obtenir une image séquentielle limitée en largeur de bande spatiale afin d'éviter le repliement dû au sous-échantillonnage temporel. Le circuit 201 est suivi, en série, d'un circuit d'échantillonnage temporel 202 qui divise par deux le rythme temporel de l'image (on passe donc à 25 images par seconde), puis d'un circuit 203 de sous-échantillonnage spatial qui permet de réduire le nombre d'échantillons dans chaque plan d'image (par l'exemple à l'aide d'un sous-échantillonnage quinconce ligne qui supprime un point sur deux). En sortie du circuit 201 est également prévu, en parallèle sur la connexion en série des circuits 202 et 203, un étage d'estimation de mouvement 204 qui va être maintenant décrit en détail.

L'estimation de mouvement effectuée par l'étage 204 a pour objectif de déterminer pour chaque bloc de l'image de rang 2k+1 qui est éliminée un vecteur de déplacement D tel que l'on puisse obtenir une approximation de ladite image éliminée à partir de la demi-somme des images non éliminées qui l'entourent, dans le cas présent à partir de la demi-somme des images 2k et 2k+2. Cette approximation est ici exprimée par la relation (1), donnée en annexe comme les autres expressions mathématiques qui apparaissent dans la suite de la description. Dans cette relation, X désigne le bloc courant de l'image 2k+1, D le vecteur de mouvement lorsqu'on a appliqué l'estimation de mouvement aux images 2k et 2k+2, et $\hat{I}$ l'approximation de l'intensité du point X du bloc courant de l'image 2k+1.

Cet objectif peut être formulé également en exprimant que l'on veut associer à chaque bloc X de l'image 2k+1 un vecteur $D_x$ tel que l'expression (3) soit minimale (cette expression, dans laquelle DFD provient des termes anglais correspondants "Displaced Frame Difference", est l'erreur d'approximation attachée au bloc courant et équivalente, pour ce bloc, comme indiqué par l'expression (2), à la somme des carrés des erreurs d'approximation DFD sur tous les points du bloc). Ce principe connu d'examen de la corrélation entre blocs (décrit notamment dans l'article de J.R. Jain et A.K. Jain, "Displacement measurement and its application in interframe image coding", paru dans la revue IEEE Transactions on Communications, vol.COM-29, n°12, décembre 1981, pages 1799 à 1808) est mis en oeuvre, dans l'étage d'estimation de mouvement 204 ici décrit, en deux étapes distinctes mais extrêmement similaires.

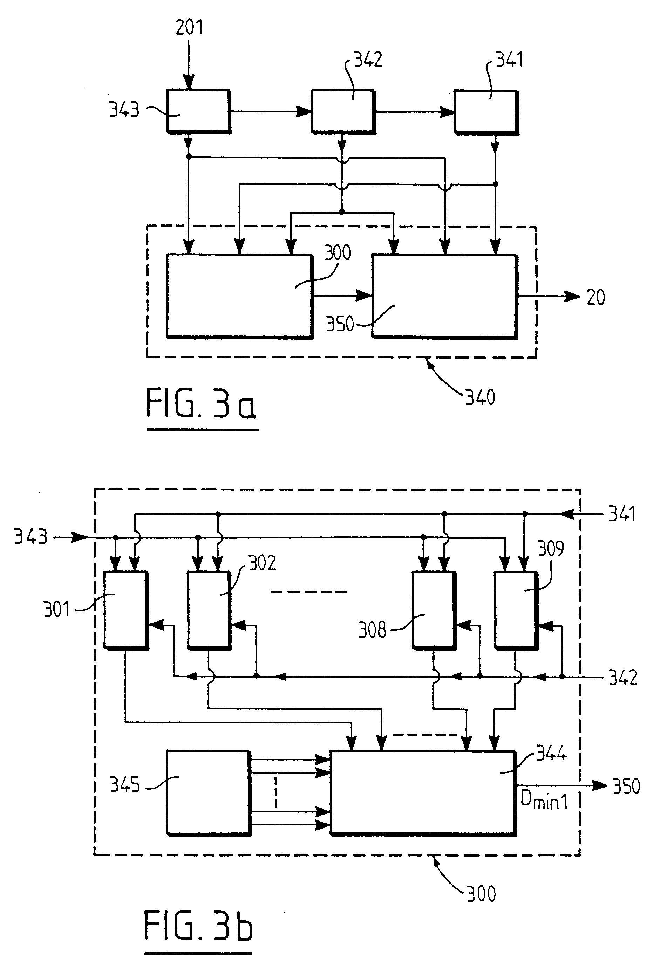

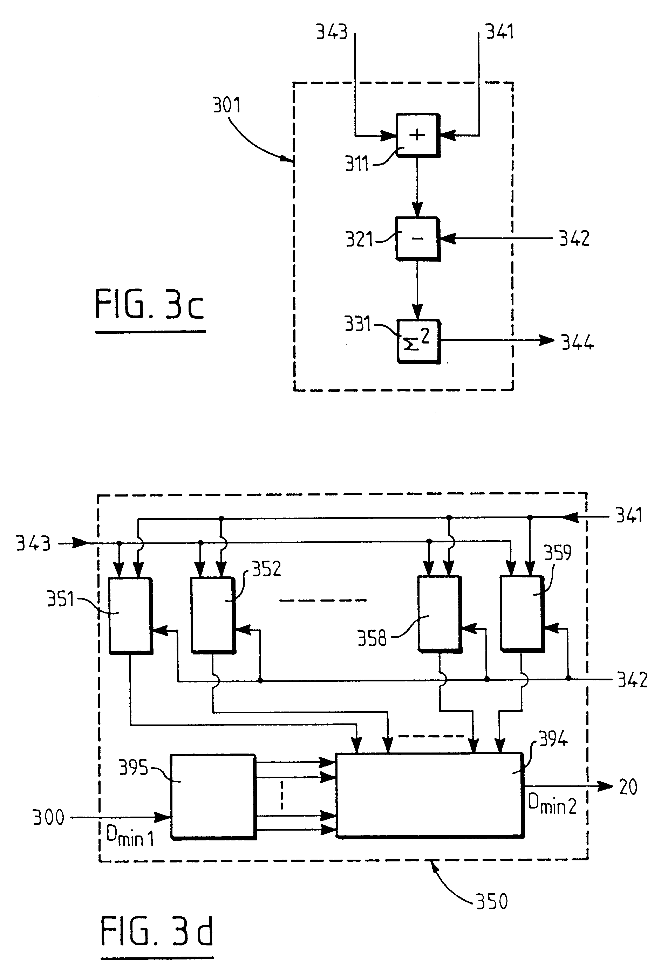

L'étage d'estimation de mouvement 204, représenté à titre d'exemple non limitatif sur la figure 3a, comprend, pour l'exécution de ces deux étapes, un ensemble 340 de deux circuits d'estimation 300 et 350 pratiquement identiques, ainsi que trois mémoires d'images en série 341, 342 et 343. Le circuit d'estimation 300, par exemple, comprend, comme indiqué sur la figure 3b qui en donne une représentation plus détaillée neuf cellules identiques 301 à 309 déterminant neuf distorsions (ou erreur d'estimation telle que définie par l'expression (3) ou l'expression (2)) relatives aux neuf déplacements suivants (Dx, Dy) = (2,2), (2,0), (2,-2), (0,2), (0,0), (0,-2), (-2,2), (-2,0), (-2,-2). Ces neuf déplacements sont stockés dans une mémoire 345. Chacune des cellules 301 à 309 comprend elle-même des éléments identiques, et ces éléments, considérés par exemple pour la première des neuf cellules, comprennent, comme indiqué sur la figure 3c montrant cette première cellule, un additionneur 311, qui est destiné à réaliser la demi-somme des images de rang 2k et 2k+2, un soustracteur 321 et, en série avec ces deux éléments, un circuit 331 d'élévation au carré et de sommation. L'additionneur 311 reçoit la sortie des mémoires d'image 341 et 343, et la demi-somme des images 2k et 2k+2 ainsi obtenue est fournie à l'entrée par exemple positive du soustracteur 321 qui reçoit sur son entrée de signe opposé la sortie de la mémoire d'image 342 stockant l'image de rang 2k+1. La sortie du soustracteur 321 est fournie au circuit 331 d'élévation au carré et de sommation dont la sortie constitue la sortie de la cellule 301.

Les neuf sorties respectives des neuf cellules 301 à 309 sont alors fournies à un circuit de comparaison des distorsions 344 qui compare les neuf valeurs de distorsion provenant ainsi des neuf cellules et détermine celle qui est la plus faible. Celui des neuf déplacements qui conduit à cette distorsion de bloc minimale est appelé $D_{min1}$ et, après extraction de la mémoire 345, est envoyé vers le deuxième circuit d'estimation 350. Ce circuit 350, représenté sur la figure 3d, reprend exactement les mêmes opérations que le circuit d'estimation 300, mais sur neuf autres valeurs de déplacements qui sont les suivantes : $(D_x, D_y) = D_{min1} + (1, 1)$, $D_{min1} + (1,0)$, $D_{min1} + (1, -1)$, $D_{min1} + (0, 1)$, $D_{min1} + (0, 0)$, $D_{min1} + (0, -1)$, $D_{min1} + (-1,1)$, $D_{min1} + (-1, 0)$, $D_{min1} + (-1, -1)$, et qui sont cette fois stockées dans une mémoire 395 recevant $D_{min1}$.

Le circuit d'estimation 350 comprend neuf cellules 351 à 359, composées elles-mêmes d'éléments identiques qui, considérés par exemple comme précédemment pour la première des neuf cellules, comprennent un additionneur, un soustracteur et un circuit d'élévation au carré et de sommation, prévus en série. Les sorties des neuf cellules 351 à 359 sont fournies à un circuit de comparaison des distorsions 394 qui détermine la distorsion la plus faible et permet la sélection du déplacement $D_{min2}$ correspondant, c'est-à-dire de celui qui minimise la distorsion pour le bloc courant X de l'image 2k+1.

Le déplacement ainsi sélectionné est alors envoyé vers le canal d'assistance numérique 20, tandis que la sortie du circuit 203 de sous-échantillonnage spatial est envoyée vers le circuit d'aiguillage 103. A la réception, le dispositif de compensation de mouvement reçoit une séquence d'images avec une cadence de 25 images par seconde, ces images étant spatialement sous-échantillonnées, et restitue une séquence d'images de 50 images par seconde, 1250 lignes, 1440 points par ligne, soit en format entrelacé 2:1 avec $54.10^6$ échantillons par seconde, soit en format séquentiel avec $108.10^6$ échantillons par seconde.

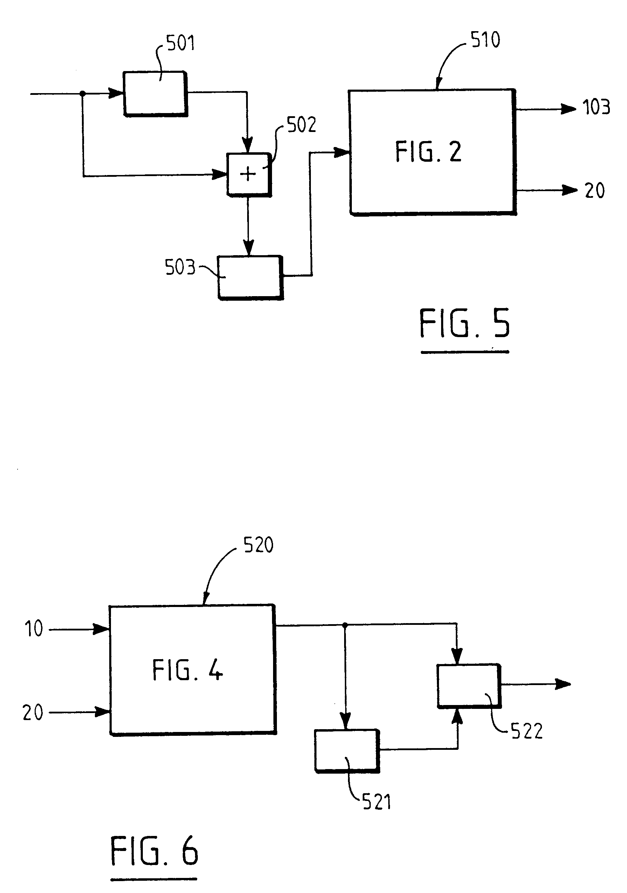

Ce dispositif de compensation de mouvement à la réception comprend tout d'abord, comme indiqué sur l'exemple de réalisation de la figure 4, un circuit de postfiltrage spatial 401 réalisant une interpolation spatiale pour obtenir une séquence de 25 images par seconde, 1250 lignes par image, 1440 points par ligne. Ce circuit 401 est suivi d'un circuit de retard 402 (le retard apporté est ici de 20 millisecondes), puis d'un commutateur 403 qui permet, à partir de deux séquences d'image ayant chacune une période de 40 millisecondes mais décalées de 20 millisecondes, de reconstituer une séquence ayant une période de 20 millisecondes. En sortie du circuit de postfiltrage spatial 401 est par ailleurs prévu, en parallèle sur la connexion en série des circuits 402 et 403, un étage d'interpolation temporelle compensée en mouvement 404.

Cet étage 404 comprend d'une part deux mémoires d'image en série 441 et 443, qui stockent les deux images successivement transmises par le canal analogique 10 et post-filtrées, c'est-à-dire les deux images de rang 2k et 2k+2 respectivement, et d'autre part un additionneur 444 qui est placé en sortie desdites mémoires et qui permet d'effectuer la demi-somme des images transmises, selon l'expression (4) où X représente les coordonnées du point courant, $D_{min2}$ le déplacement attribué au point et délivré par le canal d'assistance numérique 20, $I(X-D_{min2}, 2k)$ et $I(X+D_{min2}, 2k+2)$ l'intensité aux points associés à X sur les images transmises de rang 2k et 2k+2 respectivement (compte tenu du mouvement estimé), et $\hat{I}$ l'intensité au point X de l'image éliminée à reconstituer. La sortie de l'additionneur 444 constitue la deuxième entrée du commutateur 403.

Le commutateur 403 reçoit donc d'une part des images 1:1 qui sont les images 2k, 2k+2, etc... transmises toutes les 40 millisecondes et d'autre part des images 1:1 qui sont les images $\hat{I}$ estimées d'après le déplacement transmis par le canal 20 et dont la période est également 40 millisecondes avec un décalage de 20 millisecondes par rapport aux images transmises. Ce commutateur 403 délivre donc une séquence d'images ayant une cadence de 20 millisecondes entre images. Un circuit de conversion de format 405 transforme cette suite d'images séquentielles en une suite d'images entrelacées à haute définition prête à être visualisée. Dans le cas où la suite d'images à haute définition est visualisée en format séquentiel, le circuit de conversion de format 405 est omis.

Les structures de dispositif précédemment décrites peuvent être modifiées afin d'obtenir un taux de sous-échantillonnage temporel plus élevé, par exemple égal à 4. Ces structures modifiées sont représentées sur la figure 5, pour la partie émission, et sur la figure 6, pour la partie réception.

Le dispositif d'estimation de mouvement à l'émission comprend alors, comme indiqué sur la figure 5 dans le cas d'une suite d'images entrelacées, d'une part le dispositif de la figure 2, ici désigné par la référence 510, et d'autre part, à l'entrée de ce dispositif 510, un circuit de filtrage temporel à maintien, composé d'un circuit à retard 501 imposant un retard égal à T et d'un additionneur 502, et un circuit 503 de sous-échantillonnage temporel. Le circuit de filtrage temporel à maintien (501, 502) reçoit les images 1250 lignes, 50 Hz, 2:1 et fournit à sa sortie une série d'images séquentielles (1250 lignes, 50 Hz, 1:1) dont l'échantillonnage permet d'obtenir à l'entrée du dispositif d'estimation de mouvement 510 une série d'images séquentielles 1250 $\ell$, 25 Hz, 1:1. Cette séquence d'images est traitée par le dispositif 510 qui délivre finalement une série d'images séquentielles de période 80 millisecondes. Dans le cas d'une suite d'images séquentielles, les fonctions des circuits 501 et 502 sont déjà réalisées, et ces circuits sont donc omis. Les images d'entrée sont alors reçues directement par le circuit 503.

De même, à la réception, le dispositif de compensation de mouvement comprend, comme indiqué sur la figure 6, d'une part le dispositif de la figure 4 désigné ici par la référence 520 et d'autre part, en sortie de ce dispositif 520, un circuit d'interpolation composé d'un circuit à retard 521 imposant un retard égal à T et d'un commutateur 522. Ce circuit d'interpolation (521, 522) permet de transformer la série d'images séquentielles 1250 lignes, 25 Hz, 1440 points par ligne présente en sortie du dispositif 520 en une séquence d'images entrelacées ayant une cadence temporelle de 20 millisecondes, c'est-à-dire en une série d'images 1250 lignes, 50 Hz, 2:1, 54 M-échantillons par secondes, qui est fournie au multiplexeur dont la sortie constitue la séquence d'images entrelacées à haute définition prête à être visualisée. Ce même dispositif (521, 522) permet aussi d'obtenir des images séquentielles 1250 $\ell$., 50 Hz, 1:1, 108 M-échantillons/seconde.

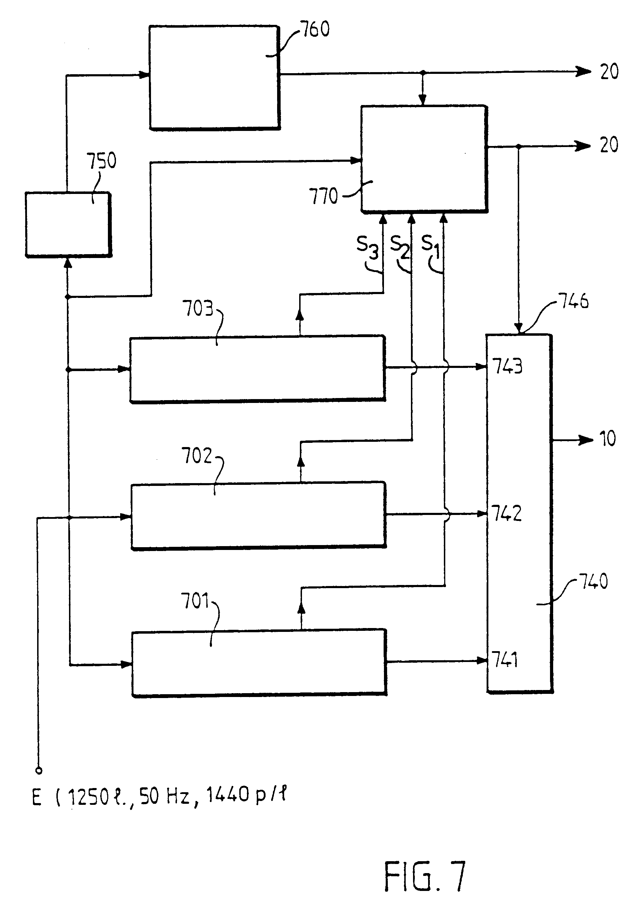

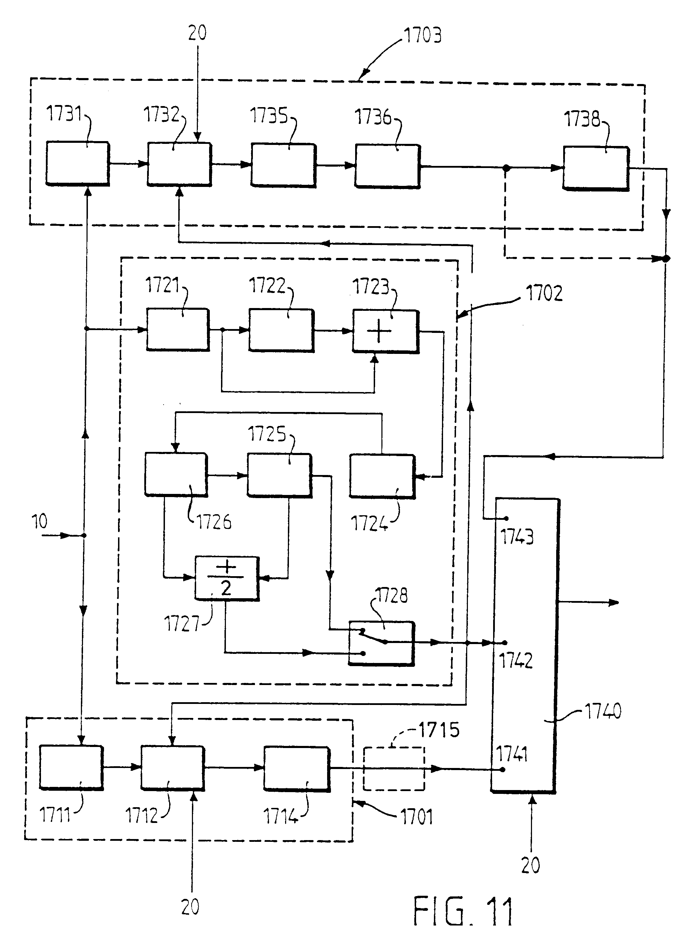

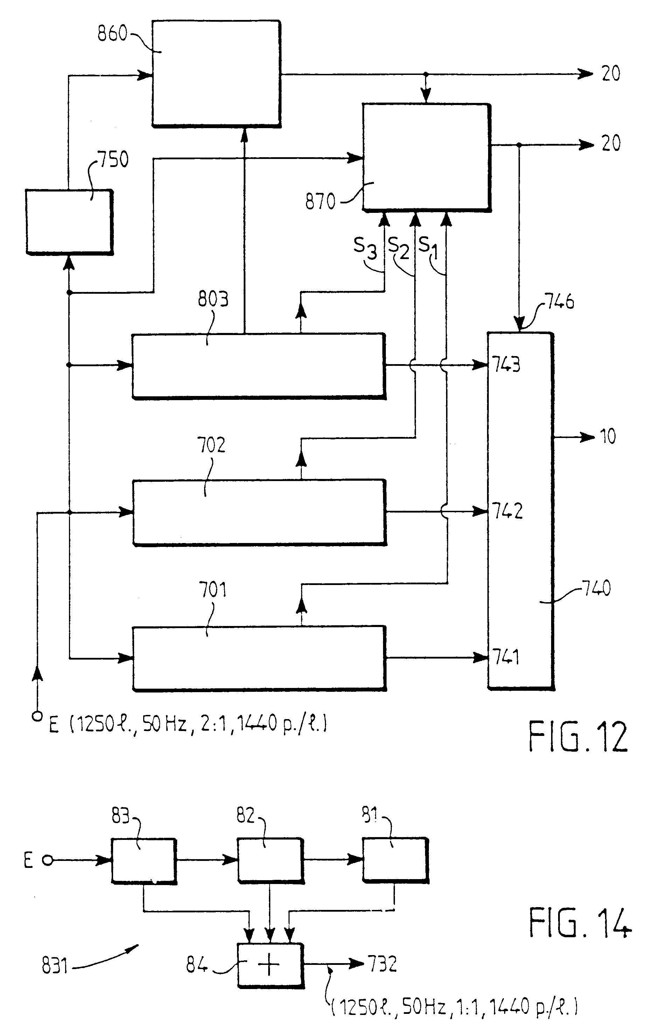

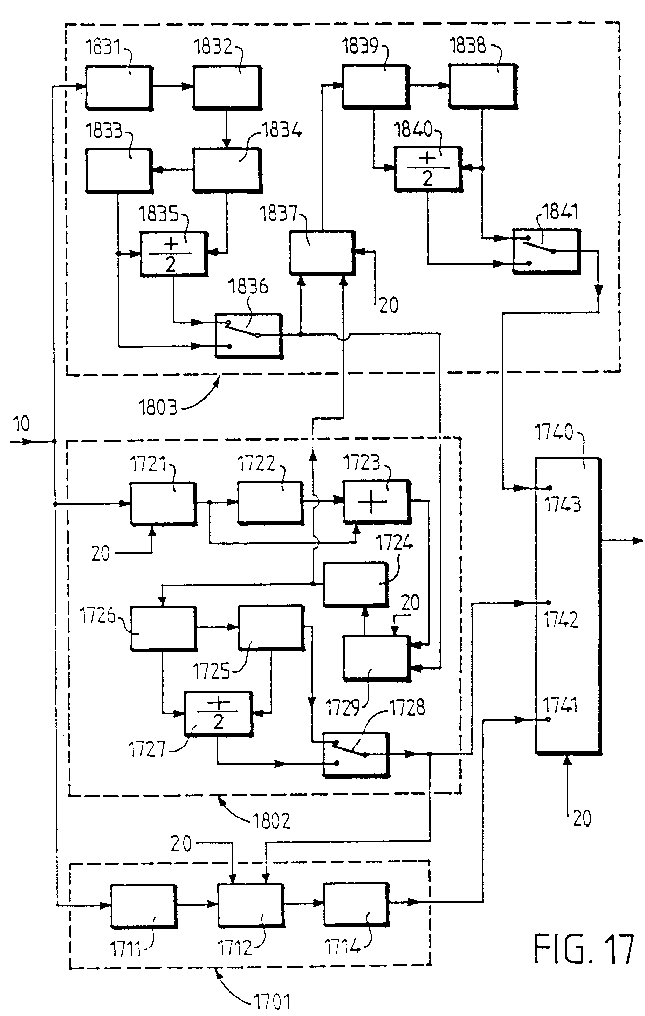

Par ailleurs, on peut aussi appliquer le principe et la mise en oeuvre décrits ci-dessus dans un système de transmission constitué comme suit. La figure 7 montre un mode de réalisation possible, dans un système de transmission d'images de télévision à haute définition, d'un dispositif de codage conforme à la présente invention, la figure 11 montrant de façon correspondante le dispositif de décodage associé à ce dispositif de codage dans le système de transmission (les figures 12 et 17 montreront de même une variante perfectionnée du dispositif de codage et du dispositif de décodage correspondant).

Plus précisément, le dispositif de codage de la figure 7 comprend tout d'abord, en parallèle, trois branches 701, 702, 703 appelées ici respectivement branche 20 millisecondes, branche 40 millisecondes, et branche 80 millisecondes. Ces trois branches 701 à 703 décrites ci-dessous reçoivent chacune, sur leur entrée E commune, les images haute définition pouvant avoir le format 1250 lignes, 50 Hz, 2:1, 1440 points/ligne, et organisées alors en une suite d'images entrelacées, ou bien le format 1250 $\ell$., 50 Hz, 1:1, 1440 points/ligne, et organisées alors en une suite d'images séquentielles.

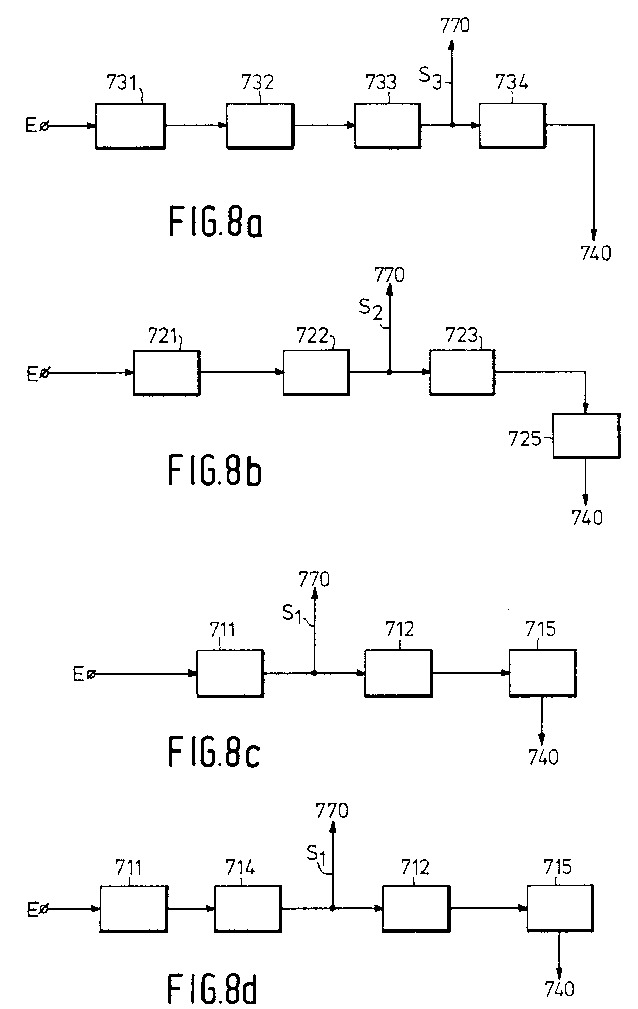

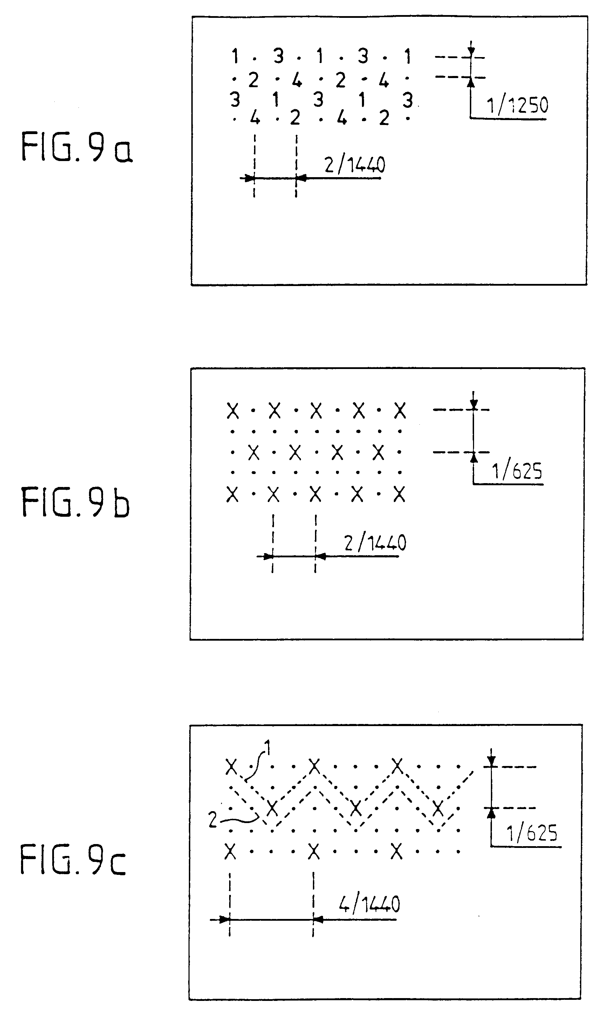

Dans la deuxième branche 702 dite branche 40 millisecondes, représentée sur la figure 8b, on opère le traitement décrit plus haut, exécuté dans le cas de la figure 2 par les circuits 201 à 203 et, dans le cas présent de la figure 8b, par les circuits 721, 722, 723. Plus précisément, un échantillonneur temporel 721 au rythme 1/2 délivre des images 625 $\ell$., 25 Hz, 1:1, 1440 p./ligne, lorsque l'entrée E est au format entrelacé ou des images 1250 $\ell$., 25 Hz, 1:1, 1440 points/ligne lorsque l'entrée E est au format séquentiel. Ces images sont alors reçues par un filtre spatial 722 fournissant des images 1250 lignes, 25 Hz, 1:1, 1440 points/ligne, puis par un sous-échantillonneur spatial 723 en quinconce ligne délivrant des images 1250 $\ell$., 25 Hz, 2:1, 720 p./ligne. Les images de sortie du sous-échantillonneur spatial 723, conformes au format d'image représenté sur la figure 9b, sont fournies à un circuit 725 de modification de format (en anglais : shuffle circuit) qui, en deux trames et en 40 millisecondes (donc toutes les 20 millisecondes) les envoie par groupes de lignes (1, 5, 9, 13, etc... puis 3, 7, 11, 15, etc...) vers une entrée d'un circuit d'aiguillage 740 dont la fonction est précisée plus loin. Les images présentes à l'entrée du sous-échantillonneur spatial 723 (connexion $S_2$) sont également envoyées vers un circuit de prise de décision 770 qui est décrit plus loin.

Dans la troisième branche 703 dite branche 80 millisecondes, représentée sur la figure 8a, la suite d'images E est tout d'abord filtrée temporellement par un filtre temporel 731, puis elle passe au travers d'un filtre spatial 732 pour éviter les repliements dûs au sous-échantillonnage spatial réalisé dans le circuit 733 selon une des quatre phases représentées sur la figure 9a. La sortie du circuit de sous-échantillonnage spatial 733 est alors envoyée d'une part vers le circuit 770 de prise de décision et d'autre part vers un circuit 734 dit de modification de format qui, en quatre trames et en 80 millisecondes (donc toutes les 20 millisecondes), les envoie par groupes de lignes (1, 5, 9, 13, etc..., puis 2, 6, 10, 14, etc..., et ainsi de suite sur les 80 millisecondes, ou bien en zig-zag) vers le circuit d'aiguillage 740.

Enfin, dans la première branche 701 dite branche 20 millisecondes, représentée sur la figure 8c, la structure d'échantillonnage est cette fois telle qu'un point sur quatre seulement est retenu. La branche 701 comprend un filtre spatial 711, suivi d'un sous-échantillonneur vertical 714 de rythme 1/2 dans le cas où les images d'entrée sont séquentielles, de façon à revenir au format 1250 $\ell$., 50 Hz, 2:1, 1440 points/ligne. Dans ce cas des images séquentielles, la réalisation de la figure 8c est remplacée par celle de la figure 8d. La branche 701 comprend ensuite un sous-échantillonneur spatial 712 de rythme 1/4 et en quinconce ligne, qui fournit des images 1250 $\ell$, 50 Hz, 2:1, 360 p./ligne. Ces images de sortie du sous-échantillonneur spatial 712, conformes au format d'image représenté sur la figure 9c, sont fournies à un circuit 715 de modification de format qui, en deux trames et en 40 millisecondes (donc toutes les 20 millisecondes), envoie vers une troisième entrée du circuit d'aiguillage 740, par exemple d'abord les échantillons situés en zig-zag sur la ligne brisée notée 1 puis ceux situés également en zig-zag mais sur une ligne brisée notée 2 (voir la figure 9c). Ici, seul le motif (en croix) de la figure 9c importe. Ce motif peut être translaté d'une trame à une autre. Ainsi, la ligne brisée 2 peut passer par n'importe quel point voisin d'une croix, y compris par les croix elles-mêmes. Comme précédemment, les images d'entrée du sous-échantillonneur 712 (connexion $S_1$) sont également envoyées vers une troisième entrée du circuit de prise de décision 770.

De la description qui précède, faite en référence aux figures 7, 8a à 8c, et 9a à 9c, il résulte que le circuit d'aiguillage 740 admet sur ses trois entrées, notées respectivement 741 à 743, trois séquences d'images qui sont des images comprimées, puisque, dans chacune des trois branches 701 à 703, on a procédé à l'élimination d'un certain nombre de points d'image. On remarquera en outre que, dans chacune des trois séquences ainsi constituées, les images contiennent le même nombre de points ou échantillons à transmettre par tranche de 20 millisecondes.

Le circuit d'aiguillage 740 fournit alors sur sa sortie une séquence de points ou échantillons dans laquelle le contenu correspondant à chaque bloc des images d'origine provient de l'une ou l'autre des trois branches selon la valeur d'un signal de décision reçu sur une entrée 746 de ce circuit 740 et provenant du circuit de prise de décision 770.

Ce circuit de prise de décision 770, décrit au paragraphe suivant, est précédé d'un circuit 760 d'estimation de mouvement semblable à l'étage d'estimation de mouvement 204 de la figure 2. Ce circuit 760 est lui-même précédé d'un filtre spatial 750 pour passer, si tel n'est pas déjà le cas, à un format non entrelacé et pour limiter la bande passante. Le circuit 760 a pour objet, comme l'étage 204, de déterminer, pour chaque bloc (ou ensemble de m x n échantillons) des images non entrelacées d'un certain rang (par exemple des images 2k+1 de rang impair) qui sont éliminées avant transmission, un vecteur de déplacement D. Plus précisément, ce vecteur D doit être tel que l'on puisse obtenir une approximation de l'image éliminée de rang 2k+1 à partir de la demi-somme des images non éliminées de rang 2k et 2k+2 qui l'entourent, l'erreur d'approximation DFD attachée à chaque bloc étant minimale (on a vu plus haut que cette recherche visant à rendre l'erreur DFD minimale était déjà décrite dans des documents antérieurs, et que l'exemple qui en était donné ne l'était qu'à titre de réalisation préférentielle).

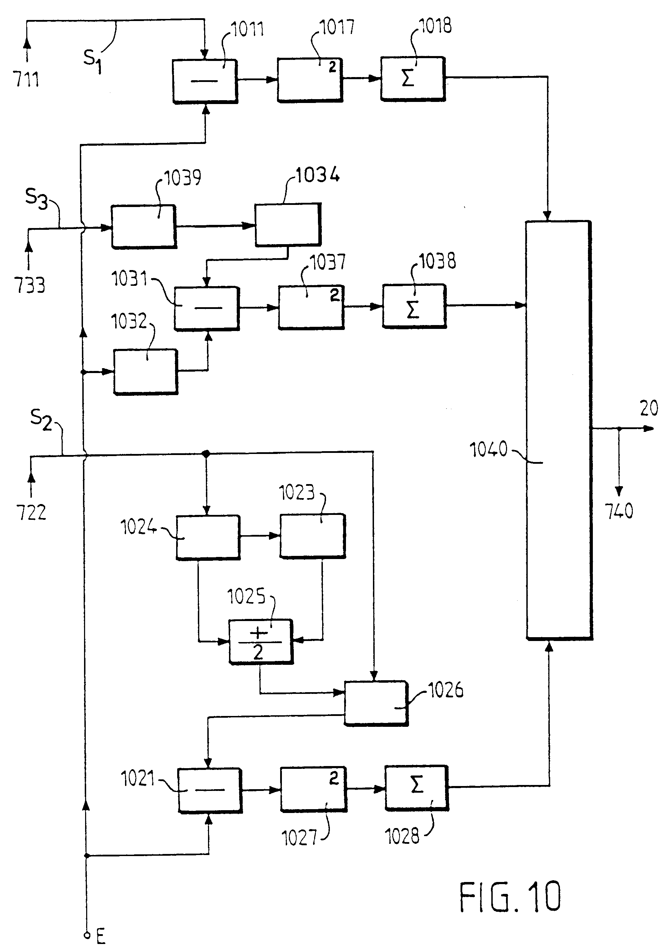

Le circuit de prise de décision 770 peut maintenant être décrit en détail. Ce circuit 770, représenté sur la figure 10, comprend trois voies en parallèle comprenant chacune un circuit de comparaison, un circuit d'élévation au carré, et un circuit de sommation bloc par bloc, les sorties de ces trois voies étant envoyées vers trois entrées correspondantes d'un circuit 1040 de comparaison de distorsions et de sélection de l'indice de branche correspondant à la plus faible d'entre elles.

La première voie, correspondant à la branche 20 millisecondes, comprend d'abord un soustracteur 1011, qui reçoit d'une part l'image d'entrée 1250 $\ell$., 50 Hz, 1440 p./ligne et d'autre part, la sortie $S_1$ du filtre 711 de

7

la branche 701. Ce soustracteur 1011 est suivi d'un circuit d'élévation au carré 1017 puis d'un sommateur 1018 sur chaque bloc, dont la sortie exprime la distorsion relative à la branche 20 millisecondes et mesurée bloc par bloc.

La troisième voie, correspondant à la branche 80 millisecondes, comprend de même un soustracteur 1031, qui reçoit d'une part, par l'intermédiaire d'un circuit à retard 1032 destiné à compenser le retard introduit par le filtrage spatio-temporel de la branche fixe 703, l'image d'entrée 1250 $\ell$, 50 Hz, 1440 p./ligne et d'autre part, par l'intermédiaire d'un circuit 1033 de mémorisation permettant le cumul de quatre trames successives sous-échantillonnées issues de la sortie $S_3$ du circuit 733 et d'un circuit de postfiltrage 1034 réalisant l'interpolation de la branche 80 millisecondes, la sortie $S_3$ du filtre 733. Ce soustracteur 1031 est suivi d'un circuit d'élévation au carré 1037 et d'un sommateur bloc par bloc 1038 dont la sortie exprime la distorsion relative à la branche 80 millisecondes.

La deuxième voie, correspondant à la branche 40 millisecondes, comprend également un soustracteur 1021 recevant sur une entrée l'image d'entrée 1250 $\ell$., 50 Hz, 1440 p./ligne, et, sur son autre entrée, l'image obtenue comme suit à partir de la sortie $S_2$ du filtre 722. Cette sortie $S_2$ est envoyée d'une part à une borne d'entrée d'un commutateur 1026 et d'autre part à deux mémoires en série 1023 et 1024 qui stockent respectivement les images de rang 2k et 2k+2 successivement transmises. Ces deux mémoires 1023 et 1024 reçoivent également le vecteur de déplacement D, déterminé pour chaque bloc par le circuit d'estimation de mouvement 760 en vue d'obtenir une approximation de l'image éliminée de rang 2k+1 à partir de la demi-somme des images 2k et 2k+2. Cette demi-somme est effectuée par un additionneur 1025 prévu en sortie des deux mémoires 1023 et 1024. La sortie de l'additionneur 1025 est elle-même reliée à l'autre borne d'entrée du commutateur 1026, dont la sortie, provenant alternativement de la sortie du filtre 1022 ou de celle de l'additionneur 1025 pour reconstituer une image au format entrelacé, est alors fournie à ladite autre entrée du soustracteur 1021. Ce soustracteur 1021 est suivi, comme dans les deux cas précédents, d'un circuit d'élévation au carré 1027 puis d'un sommateur bloc par bloc 1028 dont la sortie exprime la distorsion relative à la branche 40 millisecondes.

Les distorsions, ainsi disponibles en sortie des trois voies en parallèle qui viennent d'être décrites, sont fournies, comme indiqué plus haut, au circuit 1040 qui les compare et sélectionne la plus faible d'entre elles pour envoyer l'indice de branche correspondant vers l'entrée 746 du circuit d'aiguillage 740. Cet indice de branche constitue ledit signal de décision qui commande dans le circuit d'aiguillage 740 la sélection soit des échantillons de sortie de la branche 701 dite 20 millisecondes, soit ceux de sortie de la branche 702 dite 40 millisecondes, soit ceux de sortie de la branche 703 dite 80 millisecondes, avec cette restriction que, si l'on constate dans la séquence des décisions, la présence d'une décision isolée, on contraint cette dernière à être finalement une décision identique aux huit les plus proches. La sélection ainsi opérée commande donc la transmission de l'une des trois sorties de branche.

Réciproquement, à la réception, les images effectivement transmises sont traitées dans le dispositif de décodage de la figure 11 en vue d'une reconstruction des images à haute définition d'origine. Ce dispositif de décodage comprend tout d'abord, à cet effet, comme dans le cas de la figure 7, trois branches en parallèle 1701, 1702, 1703 qui reçoivent chacune les images effectivement transmises et dont les sorties sont reçues respectivement sur les entrées 1741, 1742, 1743 d'un circuit d'aiguillage 1740. Ces branches 1701 à 1703 sont également appelées respectivement branches 20, 40 et 80 millisecondes.

Dans la branche 1702 dite 40 ms, la séquence des images transmises est fournie à un circuit d'interpolation dynamique, comprenant un circuit 1721 d'insertion de zéros entre les signaux transmis, ainsi qu'un circuit 1722, placé à la sortie de ce dernier et introduisant un retard de 20 millisecondes. Ce circuit 1721 génère à partir de deux trames successives une image au format de la figure 9b, c'est-à-dire de cadence 40 millisecondes, au format non entrelacé. Ce circuit d'interpolation dynamique est suivi d'un additionneur 1723 des sorties des circuits 1721 et 1722 respectivement. L'image 1250 $\ell$., 25 Hz, 1:1, 1440p./ligne de sortie de l'additionneur 1723 est fournie à un circuit de postfiltrage spatial 1724, puis à un circuit de reconstitution d'image comprenant deux mémoires en série 1725 et 1726 et un additionneur 1727 effectuant la demi-somme des sorties de ces mémoires, selon le processus déjà décrit précédemment, à propos de l'additionneur 444 de la figure 4. Les deux mémoires 1725 et 1726 reçoivent le vecteur de déplacement estimé à l'émission et transmis par le canal d'assistance numérique 20. Un commutateur 1728, qui reçoit d'une part la sortie de la mémoire 1725 et d'autre part celle de l'additionneur 1727, délivre enfin une image 1250 $\ell$., 50 Hz, 2:1, 1440 p./ligne qui est envoyée vers l'entrée 1742 du circuit d'aiguillage 1740. Dans le cas où l'on désire visualiser des images séquentielles, le commutateur 1728 sélectionne tantôt la sortie de la mémoire 1725, tantôt celle de l'additionneur 1727, au rythme 50 Hz, de façon à délivrer une image 1250 lignes, 50 Hz, 1:1, 1440 points/ligne.

Dans la branche 1703 dite 80 ms, la séquence des images effectivement transmises 625 $\ell$., 50 Hz, 2:1, 720 p./ligne est tout d'abord fournie à un circuit 1731 dit d'interpolation dynamique, destiné à assurer comme précédemment une réinsertion de zéros entre les signaux effectivement transmis pour cette branche 80 ms.

Ce circuit 1731 génère à partir de quatre trames successives une image au format de la figure 9a, c'est-à-dire de cadence 80 millisecondes, au format non entrelacé. Dans la séquence d'images ainsi obtenue, les échantillons non nuls, dans chaque image de la séquence, sont situés en quinconce ligne. Ces images 1250 $\ell$., 50 Hz, 1:1, 1440 p./ligne de sortie du circuit 1731 sont fournies ensuite à un multiplexeur 1732, puis à un filtre temporel 1735, puis à un filtre spatial 1736 en sortie duquel est disponible une image 1250 $\ell$, 50 Hz, 1:1, 1440p./ligne. Enfin un circuit de conversion de format non entrelacé en format entrelacé 1738 délivre une image 1250 $\ell$., 50 Hz, 2:1, 1440 p./ligne, qui est envoyée vers l'entrée 1743 du circuit d'aiguillage 1740. Dans le cas d'une visualisation d'images séquentielles, le signal issu du filtre spatial 1736 est directement envoyé vers l'entrée 1743 du circuit 1740 (connexion en trait interrompu).

La branche 1701 dite 20 ms comprend, elle, simplement un circuit d'interpolation dynamique 1711, pour l'insertion de zéros comme précédemment. Ce circuit 1711 génère à partir d'une trame d'entrée une trame de sortie selon le format de la figure 9c, c'est-à-dire une trame de cadence 20 millisecondes ou une image de cadence 40 millisecondes au format entrelacé. La branche 1701 comprend ensuite un multiplexeur 1712 et un circuit 1714 de postfiltrage spatial qui délivre une image 1250 $\ell$., 50 Hz, 2:1, 1440 p./ligne ensuite envoyée vers l'entrée 1741 du circuit d'aiguillage 1740. Dans le cas d'une visualisation d'images séquentielles, le signal issu du circuit 1714 de postfiltrage spatial est converti en format non entrelacé par un circuit de conversion de format 1715 (représenté en trait interrompu) délivrant une image 1250 lignes, 50 Hz, 1:1, 1440 points/ligne.

La sortie du circuit 770 de prise de décision, qui, à l'émission, avait été envoyée vers le circuit d'aiguillage 740, est également envoyée vers le canal d'assistance numérique 20, en vue d'une restitution de cette information au décodage. Le circuit d'aiguillage 1740, de même que les multiplexeurs 1712 et 1732, reçoivent ladite information de sortie du circuit 770 transmise par le canal 20. Le circuit 1740 utilise ce signal de décision pour sélectionner de façon correspondante celle des sorties des branches 1703, 1702, ou 1701 qui convient : les multiplexeurs 1712 et 1732 soit délivrent simplement le signal de sortie du circuit 1711 ou 1731 respectivement si le signal de décision correspond justement à la branche concernée (respectivement la branche 20 ms 1701 ou la branche 80 ms 1703), soit délivrent, dans le cas contraire, la sortie du commutateur 1728 de la branche 40 ms 1702, en rétablissant selon le cas le format de la figure 9a (cas du multiplexeur 1732) ou celui de la figure 9c (cas du multiplexeur 1712). L'image reconstruite à haute définition (1250 $\ell$., 50 Hz, 2:1, 1440 p./ligne ou 1250 $\ell$., 50 Hz, 1:1, 1440 p./ligne) est donc finalement disponible en sortie du circuit d'aiguillage 1740.

Une variante perfectionnée de réalisation du dispositif de codage peut encore, on l'a vu, être proposée. La figure 12 montre cet autre mode de réalisation, et la figure 17 montre de façon correspondante le dispositif de décodage associé à ce dispositif de codage dans le système de transmission.

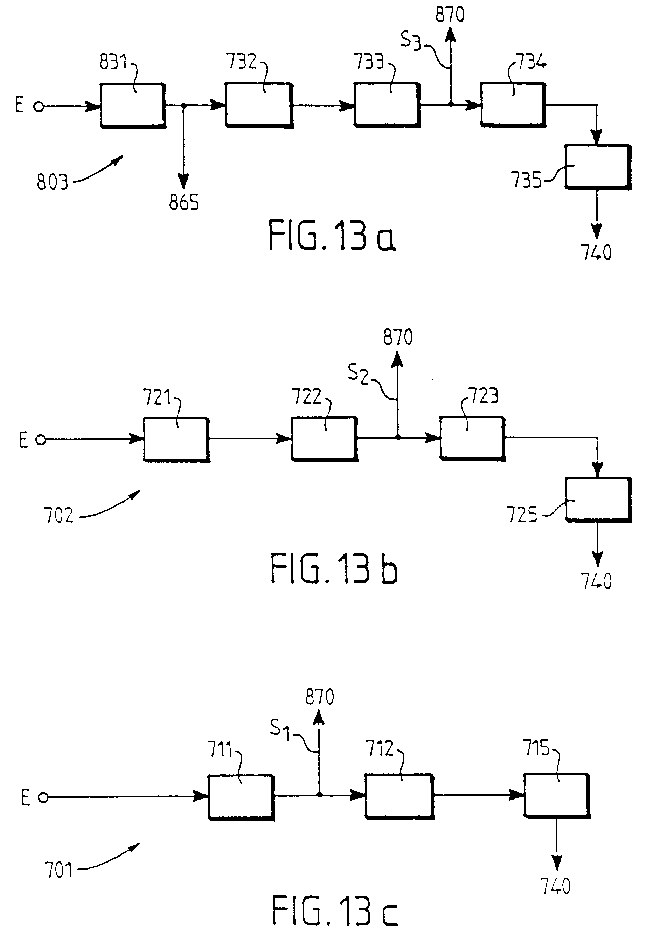

Le dispositif de codage de la figure 12 comprend tout d'abord en parallèle, comme dans le cas de la figure 7, trois branches de traitement 20, 40 et 80 ms recevant chacune, sur leur entrée commune E, une séquence d'images entrelacées 1250 $\ell$., 50 Hz, 2:1, 1440 p./ligne, et constituées comme indiqué sur les figures 13a à 13c.

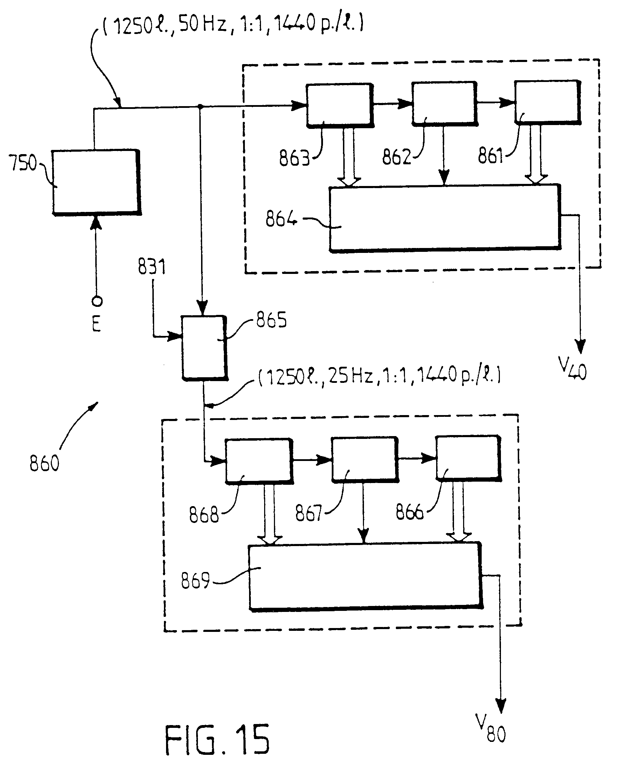

Les deux premières branches sont identiques aux branches 701 et 702 de la figure 7, c'est-à-dire qu'elles comprennent respectivement les mêmes éléments 711, 712, 715 et 721, 722, 723, 725 que ces dernières, telles qu'elles ont été représentées de façon détaillée sur les figures 8c et 8b. La troisième branche 803, elle, diffère de la branche 703 en ce sens qu'elle comprend, au lieu du simple filtre temporel 731, un filtre temporel 831 compensé en mouvement et opérant sur un horizon de 40 millisecondes, et comprenant à cet effet, comme indiqué sur la figure 14 montrant ce filtre temporel, trois mémoires d'image 81, 82, 83 et un additionneur 84. Ce filtre temporel 831 délivre des images 1250 $\ell$., 50 Hz, 1:1, 1440 p./ligne, et est suivi alors des mêmes circuits que ceux rencontrés dans la branche 703, à savoir l'échantillonneur temporel 732 au rythme 1/4, qui délivre des images 1250 $\ell$., 12,5 Hz, 1:1, 1440 p./ligne, le filtre spatial 733, qui permet de limiter la bande du signal et d'éviter le repliement de spectre dû au sous-échantillonnage réalisé, et le sous-échantillonneur spatial 734 de rythme 1/2 et en quinconce ligne, qui délivre des images 1250 $\ell$., 12,5 Hz, 1:1, 720 p./lignes conformes au format d'image de la figure 9a. Les images de sortie du sous-échantillonneur 734 sont, comme dans la branche 703, fournies à un circuit 735 de modification de format identique au circuit 735 et qui les envoie lui-même vers le circuit d'aiguillage 740.

Comme précédemment, le circuit d'aiguillage 740 fournit sur sa sortie une séquence de points ou échantillons dans laquelle le contenu correspondant à chaque bloc des images d'origine provient, par l'une des entrées 741 à 743, de l'une ou l'autre des trois branches 701, 702, 803 selon la valeur du signal de décision reçu sur l'entrée 746. Ce signal de décision provient d'un circuit de décision 870, lui-même précédé d'un étage d'estimation consistant en un circuit d'estimation de mouvement 860.

Ce circuit 860, représenté sur la figure 15, comprend d'une part un premier ensemble de circuits identique au circuit d'estimation de mouvement 760 et donc composé de trois mémoires d'image 861, 862, 863 et d'un dispositif d'estimation de mouvement 864. En parallèle sur ce premier ensemble 861 à 864 est prévu un circuit de sous-échantillonnage temporel 865 destiné à diviser par deux le rythme temporel de la suite d'images séquentielles fournie audit premier ensemble. Ce circuit 865, qui reçoit également la sortie du filtre temporel compensé en mouvement 831, est suivi d'un deuxième ensemble comprenant également trois mémoires d'image 866, 867, 868 et un dispositif d'estimation de mouvement 869.

Le circuit d'estimation de mouvement 860, lui-même précédé (voir la figure 12) d'un filtre spatial 750 de conversion de format entrelacé en format non entrelacé, est destiné à fournir non plus une suite de vecteurs de déplacement, mais deux groupes de tels vecteurs de déplacement, notés $V_{40}$ et $V_{80}$ en rapport avec le rythme temporel respectif de la suite d'images correspondante.

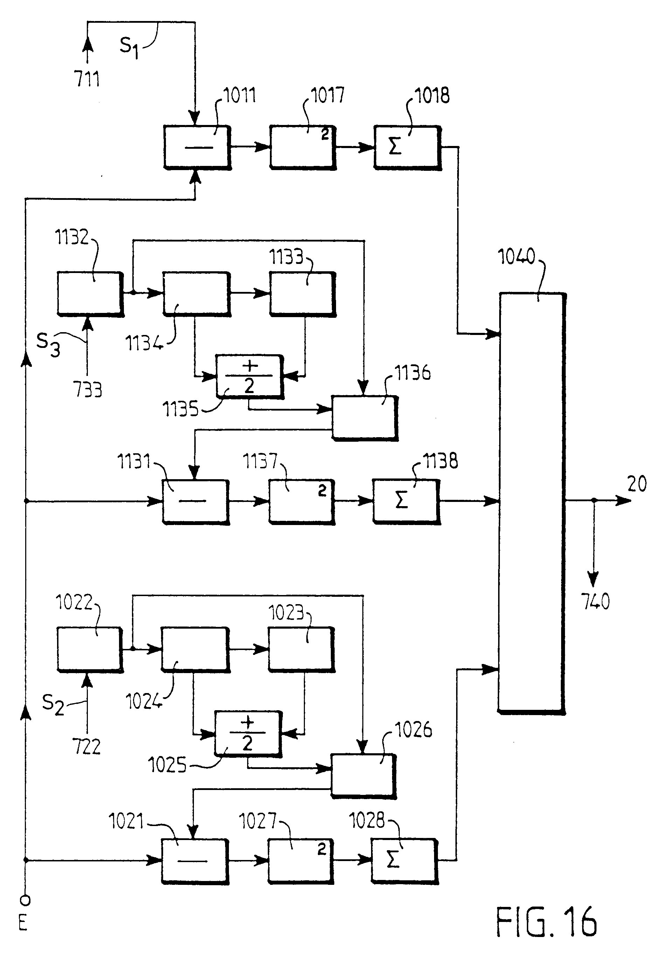

Le circuit de décision 870 est, lui aussi, de même nature que le circuit 770, à la seule différence près que le signal $S_3$ (voir la figure 8a) reçu par le circuit 870 subit ici un filtrage compensé en mouvement. Comme le montre la figure 16, le circuit 870 comprend donc trois voies en parallèle mais dont deux, les deuxième et troisième voies, sont identiques à ce qu'elles étaient dans le circuit 770 et comprennent les mêmes éléments 1011, 1017, 1018 et 1021 à 1028. La troisième voie, elle, est modifiée en ce sens qu'elle comprend maintenant, comme la deuxième voie du circuit de décision 770 de la figure 10, des éléments 1131 à 1138 absolument identiques aux éléments 1021 à 1028 de cette figure 10 et concourant au même objectif.

Réciproquement, à la réception, les images effectivement transmises après codage dans le dispositif de la figure 12 sont traitées dans le dispositif de décodage de la figure 17 en vue de la reconstruction des images à haute définition d'origine. Ce dispositif de décodage comprend tout d'abord, comme dans le cas de la figure 7, à l'émission, et de la figure 11, à la réception, trois branches en parallèle 1701, 1802, 1803, dites 20, 40 et 80 ms, recevant les images transmises et dont les sorties sont reçues sur les entrées 1741 à 1743 du circuit d'aiguillage 1740.

La première branche 1701 est identique à ce qu'elle était dans le mode de réalisation de la figure 11. La deuxième branche 1802 est pratiquement identique à la branche 1702 de la figure 11, à cette seule différence près que le circuit d'interpolation est modifié et comprend maintenant également un multiplexeur 1729, prévu en série entre l'additionneur 1723 et le circuit de postfiltrage spatial 1724. Ce circuit d'interpolation dynamique modifié est destiné à générer un maillon régulier en prélevant soit les données transmises sur deux trames successives pour les blocs traités en 40 ms et 20 ms, soit les données provenant de la branche 80 ms.

La troisième branche 1803 comprend tout d'abord un circuit d'interpolation dynamique 1831, qui, à partir de quatre trames successives de la séquence des images transmises, reconstitue une image de format 1250 $\ell$., 12,5 Hz, 1:1, 1440 p./$\ell$, puis un filtre spatial 1832 en sortie duquel est disponible une image 1250 $\ell$., 12,5 Hz, 1:1, 1440 p./ligne. Cette image est alors fournie à un circuit de reconstitution d'image comprenant deux mémoires en série 1833 et 1834, recevant le vecteur de déplacement $V_{80}$ estimé à l'émission et transmis par le canal d'assistance numérique 20, un additionneur 1835 effectuant la demi-somme de la sortie de ces mémoires, et un commutateur 1836 qui reçoit d'une part la sortie de la mémoire 1833 et d'autre part celle de l'additionneur 1835 et délivre une image 1250 $\ell$., 25 Hz, 1:1, 1440 p./ligne. Cette image est transmise d'une part à un multiplexeur 1837, qui reçoit également la sortie du circuit de postfiltrage spatial 1724, et d'autre part au multiplexeur 1729 du circuit d'interpolation dynamique de la deuxième branche 1802. Le multiplexeur 1837 est lui-même suivi d'un autre circuit de reconstitution d'image comprenant, comme le précédent, deux mémoires d'image 1838 et 1839, un additionneur 1840 effectuant la demi-somme de ces mémoires, et un commutateur 1841 qui reçoit d'une part la sortie de la mémoire 1838 et d'autre part celle de l'additionneur 1840 et délivre une image 1250 $\ell$., 50 Hz, 2:1, 1440 p./ligne. Les deux mémoires 1838 et 1839 reçoivent, cette fois, seulement le demi-vecteur de déplacement $V_{80}/2$, puisque l'intervalle d'interpolation est de 40 ms, c'est-à-dire d'amplitude moitié, et la sortie du commutateur 1841 est envoyée vers l'entrée 1743 du circuit d'aiguillage 1740.

Ce circuit d'aiguillage 1740 reçoit non seulement les sorties des trois branches 1701, 1802, 1803, mais également, sur son entrée 1746, la sortie du circuit de prise de décision 870 obtenue à l'émission et envoyée, comme les vecteurs de déplacement estimés, vers le canal d'assistance numérique 20 en vue de la restitution de cette information au décodage. Cette sortie du circuit de prise de décision 870 est également fournie au multiplexeur 1837, ainsi qu'aux circuits d'interpolation dynamique des branches 20 ms 1701 et 40 ms 1802. Le circuit d'aiguillage 1740 utilise comme précédemment ce signal de décision pour sélectionner de façon correspondante celle des sorties des branches 1701, 1802, 1803 qui convient.

Après la description des différents dispositifs de codage et de décodage qui viennent d'être détaillés, on précisera enfin que l'on peut prévoir, de façon correspondante à l'émission comme à la réception, dans chacune des première, deuxième et troisième branches de traitement, un interrupteur permettant de mettre hors circuit la branche de traitement dans laquelle il est placé. Ainsi, un dispositif de codage selon l'invention peut-il être constitué, comme on l'a décrit, des trois branches mentionnées, ou bien n'être constitué que de deux d'entre elles, les première et troisième, ou première et seconde, ou seconde et troisième, ou encore n'être constitué que de l'une d'entre elles trois seulement. Bien entendu, la structure du dispositif de décodage est directement liée sur ce point à celle du dispositif de codage, et l'on commandera de façon rigoureusement similaire les ouvertures ou fermetures des interrupteurs respectifs des branches correspondantes, au codage et au décodage. Les différentes variantes de réalisation qui en résultent ne sont pas décrites plus en détail, car elles ne posent pas de problème particulier de réalisation.

Une autre variante de réalisation du dispositif de codage selon l'invention peut être décrite dans le cas où le taux de sous-échantillonnage temporel est égal à 2. On a vu en effet, dans la description qui précède, que l'objectif du principe et des mises en oeuvre proposés était de transformer une série d'images à haute définition en des images comprimées, la compression de bande passante vidéo ainsi effectuée étant destinée à permettre la compatibilité avec le standard de télévision actuel 625 lignes entrelacées, 50 Hz, de bande passante voisine de 6 MHz.

On constate cependant que la suite des images comprimées, dites images compatibles, peut être affectée de défauts se manifestant sous la forme de saccades (dues à la fréquence de 25 Hz des images) dans des régions d'image traitées par une branche 40 millisecondes. Le filtrage temporel proposé de façon complémentaire permet l'élimination ou tout au moins la réduction de ce défaut, tout en assurant de façon efficace la restitution du mouvement entre images compatibles successives.

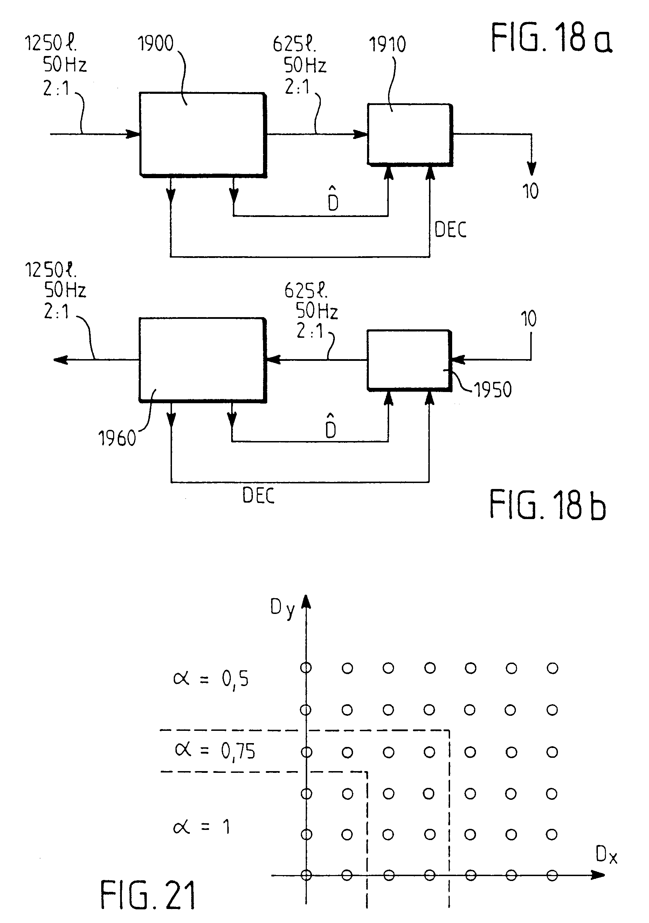

La figure 18a montre la réalisation de ce filtrage temporel dans le dispositif de codage, et la figure 18b montre de façon correspondante la mise en oeuvre du filtrage inverse dans le dispositif de décodage associé. Sur la figure 18a, la référence 1900 désigne globalement le circuit de codage tel que décrit précédemment dans l'un ou l'autre des modes de réalisation proposés. Ce circuit de codage 1900 reçoit donc les images à haute définition 1250 $\ell$., 50 Hz, 2:1, 1440 p./$\ell$. et délivre les images comprimées dites compatibles 625 $\ell$., 50 Hz, 2:1, 720 p./$\ell$.. La séquence des images comprimées est alors fournie à un circuit de filtage temporel 1910, qui reçoit également du dispositif 1900 le vecteur de déplacement $\hat{D}$ sélectionné par le circuit d'estimation de mouvement et le signal de décision, noté DEC, émis par le circuit de prise de décision (ces grandeurs $\hat{D}$ et DEC sont également fournies, on peut le rappeler, au canal d'assistance numérique 20 pour être réutilisées à la réception dans le dispositif de décodage). La sortie du circuit de filtrage temporel 1910 est envoyée vers le canal de transmission analogique 10.

A la réception, comme le montre la figure 18b, les signaux provenant de ce canal 10 sont reçus par un circuit de filtrage temporel inverse 1950, et la séquence d'images comprimées présentes en sortie de ce circuit est reconvertie par le circuit de décodage 1960 (dans l'une des réalisations de circuit de décodage décrites) en une suite d'images à haute définition prêtes à être visualisées. Le circuit de décodage 1960 renvoie également vers le circuit de filtrage temporel inverse 1950 le vecteur de déplacement $\hat{D}$ et le signal de décision DEC.

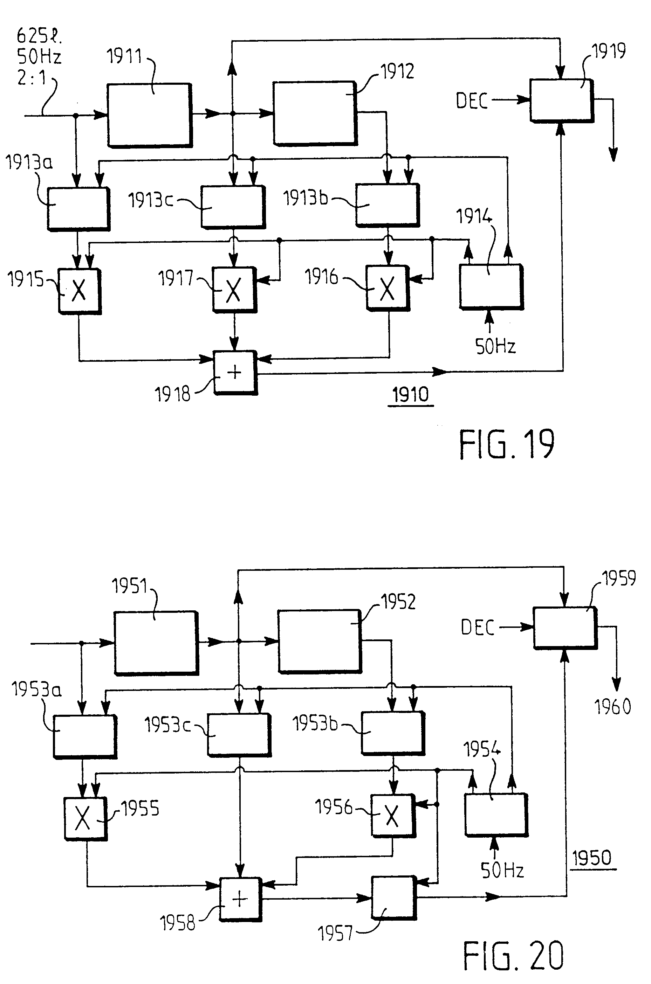

La figure 19 montre de façon plus détaillée une réalisation préférentielle du circuit de filtrage temporel 1910, qui comprend dans l'exemple décrit deux circuits à retard (ou mémoires trame) 1911 et 1912 en série, trois circuits 1913a, 1913b et 1913c de correction de déplacement reliés respectivement à l'entrée du premier circuit à retard 1911, à la sortie du deuxième circuit à retard 1912 et au point commun à ces deux circuits à retard, une mémoire morte 1914 commandée par la fréquence des images (50 Hz), trois multiplicateurs 1915, 1916 et 1917 reliés respectivement à la sortie des premier, deuxième et troisième circuits de correction de déplacement 1913a, 1913b, 1913c, un additionneur 1918 des trois sorties respectives des trois multiplicateurs 1915 à 1917, et un multiplexeur 1919.

Le principe de ce circuit 1910 consiste à effectuer dans les zones d'image traitées par la branche 40 ms une somme pondérée des images successives dans la direction du mouvement. Ce filtrage s'effectue sur trois trames successives, et les retards apportés par les circuits à retard 1911 et 1912 sont alors de 20 millisecondes. Les facteurs de pondération envoyés sur les multiplicateurs, $\alpha$ pour le multiplicateur 1917 et $(1-\alpha)/2$ pour les multiplicateur 1915 et 1916, sont fonction du vecteur de déplacement estimé $\hat{D}$, comme on le précise ci-dessous.

Les circuits de correction de déplacement 1913a, 1913b, 1913c sont des circuits à retard dont les retards sont également, pour deux d'entre eux, liés au vecteur $\hat{D}$. Le circuit de correction de déplacement 1913c introduit en effet un retard $T_o$ qui est égal à la somme des deux retards ou décalages maximaux pouvant être observés horizontalement et verticalement entre deux images successives de la séquence des images comprimées, compte tenu de la classe de mouvement desdites images. Les circuits de correction de déplacement 1913a et 1913b introduisent alors des retards respectifs $T_o + dT$ et $T_o$-dT où dT représente la somme des deux retards ou décalages réellement observés, compte tenu du mouvement réellement constaté et donc du vecteur de déplacement estimé $\hat{D}$ (la grandeur 2dT est le retard ou décalage correspondant audit vecteur estimé $\hat{D}$ de composantes $D_x$, $D_y$).

Le multiplexeur 1919 reçoit d'une part la sortie de l'additionneur 1918, d'autre part l'image comprimée disponible en sortie du circuit à retard 1911, et également le signal de décision DEC. Lorsque ce signal DEC indique qu'un bloc d'image est traité par la branche 40 ms, le multiplexeur 1919 sélectionne la sortie de l'additionneur 1918, c'est-à-dire l'image comprimée filtrée temporellement, sinon il sélectionne la sortie du circuit 1911. En outre, dans le cas où le multiplexeur 1919 sélectionne l'image filtrée, $\alpha$ est alternativement fonction

du vecteur de déplacement $\hat{D}$ comme indiqué plus haut, ou au contraire égal à 1, selon la parité des trames (par exemple égal à 1 pour les trames impaires et fonction de $\hat{D}$ pour les trames paires). La mémoire 1914 est destinée à fournir aux circuits 1913a, 1913b et 1913c les valeurs appropriées des composantes $D_x$ et $D_y$ des vecteurs de déplacement $\hat{D}$ et aux multiplicateurs 1915 à 1917 les valeurs appropriées de $\alpha$.

A la réception, le filtrage effectué par le circuit de filtrage temporel inverse 1950 est très similaire à celui du circuit 1910. La figure 20 montre une réalisation préférentielle du circuit 1950, qui comprend en effet deux circuits à retard 1951 et 1952, apportant un retard de 20 millisecondes chacun, trois circuits 1953a, 1953b et 1953c de correction de déplacement reliés respectivement à l'entrée du premier circuit à retard 1951, à la sortie du deuxième circuit à retard 1952, et au point commun à ces deux circuits à retard, deux multiplicateurs 1955 et 1956 par $(1-\alpha)/2$, reliés à la sortie des circuits de correction de déplacement 1953a et 1953b respectivement, un additionneur 1958 de la sortie du troisième circuit de correction de déplacement 1953c et des deux sorties respectives des deux multiplicateurs 1955 et 1956, un multiplicateur 1957 de la sortie de l'additionneur par $1/\alpha$, et un multiplexeur 1959 recevant d'une part, sur une première entrée, la sortie du multiplicateur 1957 et d'autre part, sur une deuxième entrée, l'image comprimée, prélevée en sortie du premier circuit à retard 1951.

Comme précédemment, ce multiplexeur sélectionne l'un de ses deux signaux d'entrée selon la valeur prise par le signal de décision DEC qu'il reçoit sur une troisième entrée, et envoie le signal ainsi sélectionné vers le circuit de décodage 1960, la valeur de $\alpha$ étant en outre, comme dans le cas du filtrage direct, égale à 1 ou fonction du vecteur de déplacement estimé, selon la parité des trames.

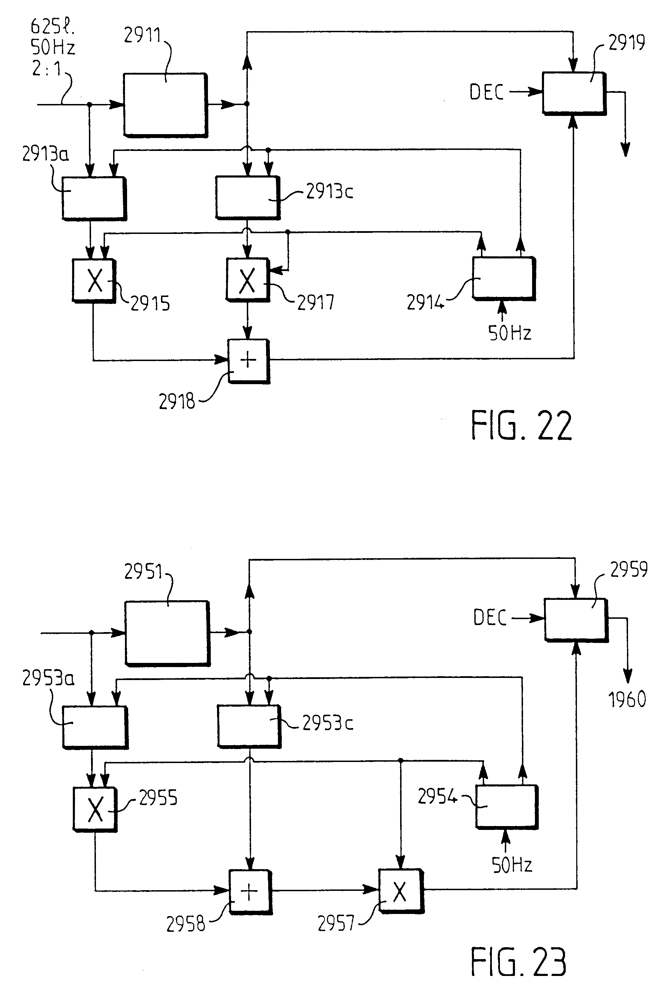

A l'émission comme à la réception, le filtrage temporel ainsi réalisé pourrait dégrader les performances du système vis-à-vis du bruit si la valeur du facteur de pondération $\alpha$ n'était pas judicieusement choisie. En effet l'intérêt d'une faible valeur de $\alpha$ est de réduire les saccades et d'améliorer la qualité des images compatibles, mais la dégradation mentionnée est d'autant plus marquée que $\alpha$ est plus faible. Le compromis adopté consiste en fait à choisir pour le facteur une valeur qui est fonction du vecteur de déplacement. Plus le vecteur de déplacement est faible, plus $\alpha$ est proche de 1 (filtrage faible), et, réciproquement, plus le mouvement est important, plus $\alpha$ est faible et plus le filtrage est intense et les saccades éliminées. La figure 21 montre quelques exemples discrets de valeurs que peut prendre le facteur selon les valeurs que prennent elles-mêmes les composantes $D_x$ et $D_y$ du vecteur de déplacement estimé dans le plan des images, par exemple $\alpha = 1$, $\alpha = 0,75$, $\alpha = 0,5$, etc..., pour des composantes de vitesse exprimées en points d'image par seconde.

Bien entendu, des variantes peuvent encore être proposées sans pour cela sortir du cadre de l'invention. En particulier la structure du circuit de filtrage temporel 1910 peut être modifiée, par exemple en supprimant une de ses voies en parallèle, comme indiqué sur la figure 22. Les éléments 1911 à 1919 de la figure 19 sont maintenant remplacés par des éléments identiques 2911 à 2919, à l'exception des éléments 1912, 1913b, 1916 qui sont supprimés. En outre, le facteur de pondération envoyé sur le multiplicateur 2915 est ici égal à $1-\alpha$, au lieu de $(1-\alpha)/2$ pour le multiplicateur 1915. Le circuit de filtrage temporel inverse de la figure 23, correspondant au circuit de filtrage direct de la figure 22, présente des modifications similaires par rapport à la figure 20, à savoir que les éléments 1951 à 1959 sont remplacés par des éléments identiques 2951 à 2959 à l'exception des élément 1952, 1953b, 1956 qui sont supprimés et du multiplicateur 1955 qui devient un multiplicateur 2955 recevant le facteur de pondération $1-\alpha$ au lieu de $(1-\alpha)/2$. En outre les retards introduits par les circuits de correction de déplacement 2913a et 2953a sont maitenant égaux à $T_0 + dT$, et ceux des circuits 2913c et 2953c égaux à $T_0 - dT$.

ANNEXE

$$(1) \qquad \hat{I}(X, 2k+1) \simeq \frac{I(X - D, 2k) + I(X + D, 2k + 2)}{2}$$

$$(2) \qquad \sum_{blocs} \left[ I(X, 2k+1) - \hat{I}(X, 2k+1) \right]^2$$

$$(3) \qquad \sum_{blocs} \left[ DFD(X, D_x) \right]^2$$

$$(4) \qquad \hat{I} = \frac{I(X - D_{min2}, 2k) + I(X + D_{min2}, 2k + 2)}{2}$$

## Revendications

1. Dans un système de transmission d'images de télévision à haute définition comprenant un étage d'émission d'informations codées représentatives desdites images et, après transmission à une fréquence de trame déterminée et par l'intermédiaire d'un premier canal à bande passante limitée impliquant un traitement de réduction de la quantité d'informations à transmettre, un étage de réception des informations transmises, dispositif de codage comprenant lui-même trois branches de traitement (701, 702, 703) situées en parallèle et recevant chacune la suite des images haute définition d'origine, un circuit (770) de décision destiné à délivrer à partir des images d'origine et des images traitées par lesdites branches un signal de décision envoyé vers un canal dit d'assistance numérique associé au premier canal, et un circuit (740) d'aiguillage des sorties des branches selon le signal de sortie dudit circuit de décision, et étant caractérisé en ce que :

   (a) les images d'origine successives étant définies par leur rang 2k-1, 2k, 2k+1, etc... dans ladite suite, ledit dispositif de codage comprend également un étage d'estimation de mouvement destiné à délivrer une ou des informations relatives au mouvement des blocs composant les images de rang 2k+1 par rapport aux blocs correspondants des images de rang 2k et 2k+2 qui entourent celles-ci ;

   (b) lesdites branches (701,702,703), destinées à délivrer trois séquences d'images comprimées contenant le même nombre d'échantillons à transmettre à la fréquence de trame, comprennent elles-mêmes chacune un filtre spatial distinct (711, 722, 733) ;

   (c) le circuit (770) de prise de décision comprend, en parallèle, trois voies de calcul de distorsion entre les images d'origine et les trois images traitées respectivement disponibles en aval desdits premier, deuxième et troisième filtres spatiaux des trois branches, et un circuit (1040) de comparaison desdites trois distorsions et de sélection de l'indice de branche correspondant à la plus faible d'entre elles, la deuxième de ces trois voies de calcul recevant la ou lesdites informations de mouvement relatives à chaque bloc d'image en vue d'une reconstitution d'une approximation des images de rang 2k+1 à partir des images de rang 2k et 2k+2.

2. Dispositif de codage selon la revendication 1, caractérisé en ce que l'étage d'estimation de mouvement comprend trois mémoires d'image en série (341, 342, 343), destinées à stocker d'une part les images de rang 2k et 2k+2 et d'autre part les images de rang 2k+1, et un dispositif d'estimation de mouvement (340) recevant en parallèle les trois sorties desdites mémoires pour délivrer selon une méthode telle que celle de corrélation par bloc la ou lesdites informations de mouvement des blocs des images de rang 2k+1 par rapport aux images de rang 2k et 2k+2 qui les entourent.

3. Dispositif de codage selon l'une des revendications 1 et 2, caractérisé en ce que, dans ledit circuit de prise de décision (770), l'indice de branche sélectionné est modifié en l'indice de la branche correspondant à la cadence de transmission d'images la plus rapide lorsque, dans la séquence des décisions, on se trouve en présence d'une décision isolée de sélection de l'indice de la branche correspondant à la cadence de transmission d'images la plus lente.

4. Système de transmission d'images de télévision à haute définition comprenant un étage d'émission d'informations codées représentatives desdites images et, après transmission, à une fréquence de trame déterminée, par l'intermédiaire d'un canal à bande passante limitée impliquant un traitement de réduction de la quantité d'informations à transmettre, un étage de réception des informations transmises, caractérisé en ce que ledit étage d'émission comprend un dispositif de codage selon l'une des revendications 1 à 3.

## Patentansprüche

1. In einem System zum Übertragen von Fernsehbildern mit hoher Auflösung, mit einer Stufe zum Übersenden von codierten Informationen zur Darstellung dieser Bilder, und, nach der Übertragung auf einer bestimmten Rasterfrequenz mittels eines begrenzten Durchlaßbandkanals, was eine Reduktonsbehandlung der zu übertragenden Informationsmenge bedeutet, mit einer Empfangsstufe für die übertragenen Informationen, eine Codieranordnung mit selbst drei parallelgeschalteten Bearbeitungszweigen (701, 702, 703), die je die ursprüngliche Bildfolge mit hoher Auflösung empfangen, einer Entscheidungsschaltung (770) zum Abgeben eines Entscheidungssignals nach einem dem analogen Kanal zugeordneten digitalen Hilfskanal ausgehend von den ursprünglichen Bildern und von den in den Zweigen bearbeiteten Bildern, und einer Multiplexerschaltung (740) der Ausgänge der Zweige entsprechend dem Ausgangssignal der Entscheidungsschaltung,
dadurch gekennzeichnet, daß

(a) die aufeinanderfolgenden Ursprungsbilder durch ihren Rang 2k-1, 2k, 2k+1, usw. in der Folge definiert werden, die Codieranordnung ebenfalls eine Bewegungsschätzungsstufe zum Ausgeben einer oder mehrerer Informationen bezüglich der Bewegung der Blöcke, die die Bilder vom Rang 2k+1 in bezug auf die Blöcke entsprechend der Bilder vom Rang 2k und 2k+2 darstellen, die diese letzten umgeben;

(b) die Zweige (701, 702, 703), die zum Ausgeben von drei komprimierten Bildsequenzen dienen, die dieselbe Anzahl von Abtastungen zum Übertragen auf der Rasterfrequenz enthalten, selbst je ein unterschiedenes räumliches Filter (711, 722, 733) enthalten;

(c) die Entscheidungsschaltung (770) enthält in Parallelschaltung drei stromabwärts der ersten, zweiten und dritten räumlichen Filter der drei Zweige verfügbare Wege zum Berechnen der Verzerrung zwischen den Ursprungsbildern und den drei jeweils bearbeiteten Bildern, und eine Vergleichsschaltung (1040) der drei Verzerrungen und der Wahl des Zweigindexes entsprechend dem schwächsten von ihnen, wobei der zweite dieser drei Berechnungswege die Information oder Informationen der Bewegung bezüglich jedes Bildblocks im Hinblick auf eine Rekonstruktion einer Annäherung der Bilder vom Rang 2k+1 empfängt, wobei von den Bildern vom Rang 2k und 2k + 2 ausgegangen wird.

2. Codieranordnung nach Anspruch 1,
dadurch gekennzeichnet, daß die Bewegungsschätzungsstufe drei reihengeschaltete Bildspeicher (341, 342, 343) zum Speichern einerseits der Bilder vom Rang 2k und 2k+2 und andererseits der Bilder vom Rang 2k+1 sowie eine Bewegungsschätzungsanordnung (340) enthält, die parallel die drei Ausgangssignale der Speicher empfängt, um mit einem Verfahren wie das blockweise Korrelationsverfahren die Information(en) der Blockbewegungen der Bilder vom Rang 2k+1 in bezug auf die Bilder vom Rang 2k und 2k+2 zu liefern, die sie umgeben.

3. Codieranordnung nach einem der vorangehenden Ansprüche 1 und 2, dadurch gekennzeichnet, daß in der Entscheidungsschaltung (770) der gewählte Zweigindex nach einem Zweigindex gemäß der schnelleren Bildübertragungskadenz geändert wird, während in der Entscheidungsfolge man sich in der Nähe einer isolierten Wählentscheidung des Zweigindexes gemäß der langsameren Bildübertragungskadenz befindet.

4. Übertragungssystem für Fernsehbilder mit hoher Auflösung, mit einer Sendestufe für diese Bilder darstellende codierte Informationen, und, nach der Übertragung auf einer bestimmten Rasterfrequenz mittels eines begrenzten Durchlaßbandkanals, was eine Verringerungsbehandlung der zu übertragenden Informationsmenge bedeutet, mit einer Empfangsstufe für die übertragenen Informationen, dadurch gekennzeichnet, daß die Sendestufe eine Codieranordnung nach einem der Ansprüche 1 bis 3 enthält.

## Claims

1. In a system for the transmission of high-definition television images comprising a stage for the emission of encoded information representing the said images and, after transmission, at a determined field frequency, by means of a first, limited pass-band channel involving a processing to reduce the quantity of information to be transmitted, a stage for the reception of the transmitted information, the encoding device comprises three processing branches (701, 702, 703) situated in parallel and each receiving the succession of the original high-definition images, a decision circuit (770) intended to supply, on the basis of the original images and the images processed by the said branches, a decision signal passed to a channel referred to as the digital assistance channel associated with the first channel, and a circuit (740) for switching of the outputs of the branches in accordance with the output signal of the said decision circuit, and being characterized in that:

(a) the successive original images being defined by their rank 2k-1, 2k, 2k+1, etc. ... in the said succession, the said encoding device likewise comprises a stage for the motion estimation intended to supply one or more information items relating to the movement of the blocks making up the images of rank 2k+1 with respect to the corresponding blocks of the images of rank 2k and 2k+2 which surround the former images;

(b) the said branches (701, 702, 703), intended to supply three sequences of compressed images containing the same number of samples to be transmitted at the field frequency, themselves each comprise a distinct spatial filter (711, 722, 733);

(c) the decision circuit (770) comprises, in parallel, three channels for the computation of distortion between the original images and the three processed images which are respectively available downstream of the said first, second and third spatial filters of the three branches, and a circuit (1040) for the comparison of the said three distortions and for the selection of the branch index corresponding to the smallest of them, the second of these three computation channels receiving the said information item or information items concerning movement relating to each image block with a view to a reconstruction of an approximation of the images of rank 2k+1 from the images of rank 2k and 2k+2.

2.  Encoding device according to Claim 1, characterized in that the stage for the motion estimation comprises three image memories in series (341, 342, 343), intended to store, on the one hand, the images of rank 2k and 2k+2 and, on the other hand, the images of rank 2k+1, and a device for the motion estimation (340) receiving, in parallel, the three outputs of the said memories to supply, in accordance with a method such as that of block matching, the said information item or information items concerning movement of the blocks of the images of rank 2k+1 with respect to the images of rank 2k and 2k+2 which surround them.

3.  Encoding device according to one of Claims 1 and 2, characterized in that, in the said decision circuit (770), the selected branch index is changed into the branch index corresponding to the most rapid image transmission rate when, in the sequence of the decisions, there is an isolated decision of selection of the index of the branch corresponding to the slowest image transmission rate.

4.  System for the transmission of high-definition television images comprising a stage for the emission of encoded information representing the said images and, after transmission, at a determined field frequency, by means of a limited pass band channel involving a processing to reduce the quantity of information to be transmitted, a stage for the reception of the transmitted information, characterized in that the said emission stage comprises an encoding device according to one of Claims 1 to 3.

FIG. 1a

FIG. 1b

FIG. 2

FIG. 4

FIG. 3a

FIG. 3b

FIG. 3c

FIG. 3d

FIG. 5

FIG. 6

FIG. 7

FIG.8a

FIG.8b

FIG.8c

FIG.8d

FIG. 9 a

FIG. 9 b

FIG. 9 c

FIG. 10

FIG. 11

FIG.12

FIG. 14

FIG.13 a

FIG.13 b

FIG.13 c

( 1250 ℓ., 50 Hz, 1:1, 1440 p./ℓ. )

750

E

831

865

860

863    862    861

864

( 1250 ℓ., 25 Hz, 1:1, 1440 p./ℓ. )

V_40

868    867    866

869

V_80

FIG. 15

FIG. 16

FIG. 17

FIG. 18 a

FIG. 18 b

FIG. 21

FIG. 19

FIG. 20

625ℓ.
50Hz
2:1

2911

2919

DEC

2913a

2913c

X
2915

X
2917

2914

50Hz

+
2918

FIG. 22

2951

2959

DEC

1960

2953a

2953c

X
2955

2954

50Hz

+
2958

X
2957

FIG. 23